(19) **Europäisches Patentamt**
**European Patent Office**
**Office européen des brevets**

(11) **EP 2 765 752 B1**

(12) **EUROPÄISCHE PATENTSCHRIFT**

(45) Veröffentlichungstag und Bekanntmachung des Hinweises auf die Patenterteilung:
**24.05.2017 Patentblatt 2017/21**

(51) Int Cl.:
*H04L 29/06* (2006.01)     *H04W 12/06* (2009.01)
*H04L 9/32* (2006.01)

(21) Anmeldenummer: **14153830.6**

(22) Anmeldetag: **04.02.2014**

(54) **VERFAHREN ZUM VERSEHEN EINES MOBILEN ENDGERÄTS MIT EINEM AUTHENTISIERUNGSZERTIFIKAT**

METHOD FOR EQUIPPING A MOBILE TERMINAL WITH AN AUTHENTICATION CERTIFICATE

PROCÉDÉ DESTINÉ À POURVOIR UN TERMINAL MOBILE D'UN CERTIFICAT D'AUTHENTIFICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.02.2013 DE 102013202001**

(43) Veröffentlichungstag der Anmeldung:
**13.08.2014 Patentblatt 2014/33**

(73) Patentinhaber:
• **Fraunhofer-Gesellschaft zur Förderung der angewandten Forschung e.V.**
**80686 München (DE)**
• **Bundesdruckerei GmbH**
**10969 Berlin (DE)**

(72) Erfinder:
• **Strumpf, Frederic**
**85748 Garching (DE)**
• **Eckert, Claudia**
**80469 München (DE)**
• **Krauss, Christoph**
**85748 Garching (DE)**
• **Paeschke, Manfred**
**16348 Wandlitz (DE)**

• **Dietrich, Frank**
**12437 Berlin (DE)**

(74) Vertreter: **Zimmermann, Tankred Klaus et al Schoppe, Zimmermann, Stöckeler Zinkler, Schenk & Partner mbB Patentanwälte Radlkoferstrasse 2 81373 München (DE)**

(56) Entgegenhaltungen:
**EP-A1- 1 873 668     US-A1- 2008 022 103**

• **"Digital cellular telecommunications system (Phase 2+); Universal Mobile Telecommunications System (UMTS); Generic Authentication Architecture (GAA); Support for subscriber certificates (3GPP TS 33.221 version 11.0.1 Release 11)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, Bd. 3GPP SA 3, Nr. V11.0.1, 1. November 2012 (2012-11-01), XP014093275,**

**Beschreibung**

Die vorliegende Erfindung bezieht sich auf ein Verfahren zum Versehen eines mobilen Endgeräts mit einem Authentisierungszertifikat.

In unserer heutigen digitalen Welt besitzt jeder Nutzer eine Vielzahl von digitalen Identitäten mit denen er sich gegenüber einem Internetdienst oder einer physikalischen Komponente identifiziert. Die Identitäten werden dabei häufig über eine E-Mailadresse, einen Namen oder eine Kunden- bzw. Kontonummer repräsentiert. Der Nachweis der Identität erfolgt dabei fast ausschließlich über PIN (PIN = Persönliche Identifikationsnummer), Passwort oder TANs (TAN = Transaktionsnummer). Darüber hinaus existieren weitere Identitäten mit denen eine Identifizierung und Authentisierung in verschiedenen Kontexten, wie zum Gebäudezugang, gegenüber Behörden oder für Finanztransaktionen (Kreditkarte, Bankkarte) erfolgt. In diesen physikalischen Szenarien wird eine Identifizierung und Authentisierung sehr häufig über Chipkarten realisiert. Gemein ist diesen Identitäten und Szenarien, dass sie jeweils ein und dieselbe Person in verschiedenen Kontexten identifizieren, wobei jeweils unterschiedliche Informationen übermittelt und verfügbar sind. Als ein besonderes Problem ist dabei zu sehen, dass insbesondere in der digitalen Welt, die Identitäten nur eine sehr geringe Sicherheit genügen. Sensitive Informationen zum Nachweis einer Identität lassen sich vergleichsweise einfach unautorisiert extrahieren, da sie sehr häufig über einfache Passwörter oder TANs abgesichert sind.

Mit der zunehmenden Verbreitung von mobilen Endgeräten und aufgrund der zunehmenden Vernetzung, werden die Anzahl der Identitäten weiter zunehmen. Vermehrt werden Informationen zur Authentisierung auf dem unsicheren mobilen Endgerät gespeichert. Aufgrund dieser Entwicklungen ist davon auszugehen, dass der Identitätsdiebstahl weiter zunehmen wird.

Zur Identifizierung und Authentifizierung kommen unterschiedliche Mechanismen zum Einsatz. Grundsätzlich ist die Authentisierung mittels Benutzername, PIN oder TAN im elektronischen Geschäftsverkehr sehr weit verbreitet. Diese Ansätze erfordern eine initiale Registrierungsphase, in der die Gültigkeit einer von einem Benutzer zur Verfügung gestellten E-Mailadresse geprüft wird und ein Geheimnis zwischen Dienstanbieter und Benutzer ausgehandelt wird. Dieses Geheimnis (*g*), welches als PIN, TAN oder Passwort realisiert wird, wird häufig vom Benutzer vorgegeben und auf der Plattform des Dienstanbieters abgelegt. Wie dieses Geheimnis auf dem Dienstanbieter abgelegt wird, hängt von der Implementation der Software des Dienstanbieters ab. Häufig wird hierzu eine zufällig gewählte Zeichenfolge, wie z.B. ein *salted hash* verwendet, wie dies aus der DE 102007016170 A1 hervorgeht. Dazu berechnet der Server des Dienstanbieters einen Integer-Wert s, auch als (*salt*) bezeichnet, der neben der Eingabe des Passwortes *g* als Eingabe für eine kryptographische Hashfunktion *H* dient. Der Salt kann als ein Initialisierungsvektor betrachtet werden und erschwert mögliche Wörterbuchangriffe. Der Server des Dienstanbieters berechnet $H(s,g) = x$ und legt *x* sowie den Salt *s* und den Nutzernamen in einer Datenbank ab. Ein Nutzer kann sich schließlich authentifizieren indem er seinen Nutzernamen und sein Geheimnis *g'* an den Server überträgt. Anhand des übertragenen Geheimnisses *g'* berechnet der Server $H(s,g') = x'$. Sofern $x' \overset{?}{=} x$ ist, ist auch $g = g'$ und der Nutzer hat sich erfolgreich authentifiziert. Die Vorteile bei diesem Verfahren liegen darin, dass der Server kein Passwort im Klartext speichert. Bei einer möglichen Kompromittierung des Servers können daher die sensitiven Klartextpasswörter nicht unmittelbar extrahiert bzw. entwendet werden.

Das Passwort *g* ist besonders schutzbedürftig, da mittels Passwort und Nutzernamen eine erfolgreiche Anmeldung beim Dienstanbieter möglich ist und somit Transaktionen abgewickelt werden können.

Vermehrt werden zur Authentisierung Signatur-basierte Authentisierungsverfahren eingesetzt wobei das notwendige kryptographische Schlüsselmaterial ebenfalls auf einem sicheren Element, z.B. einer Chipkarte oder auch als Smartcard bezeichnet, abgelegt werden kann. Zur Authentisierung wird hierbei ein Anforderungs-Antwort-Authentisierungsverfahren durchgeführt, indem eine Antwort zu einer vom Dienstanbieter generiert Anforderung mit Hilfe eines kryptographischen Schlüssel generiert wird, d.h., *Response* = $F_K$*(Challenge),* wobei *K* ein kryptographischer Schlüssel und *F* eine kryptographische Verschlüsselungsfunktion darstellt. Der Vorteil bei diesem Verfahren liegt darin, dass zum einen der kryptographische Schlüssel vor Extraktion geschützt ist und dass zum anderen für eine gegebene Anforderung eine spezifische Antwort generiert wird. Gesammelte Antworten können also nicht in andere Authentisierungssitzungen eingespielt werden.

Für Finanztransaktionen werden vermehrt Chipkarten oder einfachere Bankkarten eingesetzt. Diese Karten werden vom Finanzinstitut mit einem Geheimnis (häufig ein kryptographischer Schlüssel) ausgestattet und ausgegeben. Parallel dazu erhält der Kontoinhaber eine PIN, die als zusätzliches Sicherheitsmerkmal fungiert und die Transaktionen der Chipkarte oder einfachere Bankkarte schließlich autorisiert. In Zukunft werden Finanztransaktionen vermehrt über den EMV Standard (EMV ist die Abkürzung für Europay International (heute MasterCard Europe), MasterCard und VISA), der kontaktloses Bezahlen ermöglicht, abgewickelt werden. Grundsätzlich erfolgt hier die Authentisierung über ein Anforderungs-Antwort-Verfahren unter Rückgriff auf einen in der Karte abgelegten kryptographischen Schlüssel. EMV unterstützt und standardisiert sowohl symmetrische Verfahren, wie z.B. AES (AES = Advanced Encryption Standard, dt. erweiterter Verschlüsselungsstandard), als auch asymmetrische Verfahren, wie z.B. RSA (RSA = (Rivest, Shamir und Adleman)), wobei asymmetrische Verfahren in erster Linie im offline Fall benutzt werden.

Die EP 1 873 668 A1 schlägt vor, eine Authentisierung eines Benutzers und die Verifizierung einer Geräteintegrität zu kombinieren, um Dienste zu schützen, die über Netzwerke zugänglich sind. Nach der Durchführung einer Authentisierung eines Teilnehmers und einer Verifizierung eines von dem Teilnehmer genutzten Geräts wird ein Zertifikat bereitgestellt, welches sowohl die Authentisierung des Teilnehmers als auch die Verifizierung des Geräts bereitstellt.

Die US 2008/022103 A1 zeigt ein Verfahren zum Bereitstellen von Gerätezertifikaten für ein Gerät ansprechend auf eine Gerätezertifikatsanfrage an einen Mobildatenserver, wobei die Gerätezertifikatsanfrage einen Identifizierer eines Benutzers, einen Identifizierer des Geräts und einen öffentlichen Schlüssel des Geräts umfasst. Die Gerätezertifikatsanfrage wird von dem Mobildatenserver an eine Zertifizierungsautorität weitergeleitet, welche dem Gerät das angefragte Gerätezertifikat bereitstellt.

Der vorliegenden Erfindung liegt somit die Aufgabe zugrunde, ein Konzept zur Authentisierung eines Benutzers gegenüber Dritten zu schaffen, das die oben genannten Nachteile vermeidet bzw. vermindert.

Diese Aufgabe wird gelöst durch ein Verfahren gemäß Anspruch 1, ein Computerprogrammprodukt gemäß Anspruch 22, ein Computerprogramm nach Anspruch 23 und ein mobiles Endgerät gemäß Anspruch 24.

Ausführungsbeispiele der vorliegenden Erfindung schaffen ein Verfahren zum Versehen eines mobilen Endgeräts mit einem Authentisierungszertifikat. Das Verfahren weist Schritt des Erzeugens des Authentisierungszertifikats zur Authentisierung eines Benutzers mittels des mobilen Endgeräts, und einem Schritt des Ablegens des Authentisierungszertifikats in einer sicheren Umgebung des mobilen Endgeräts auf. Dabei wird das Authentisierungszertifikat durch einen Identitäten-Verwalter in Abhängigkeit von einem ersten Zertifikat und einem zweiten Zertifikat erzeugt. Das erste Zertifikat basiert auf einer sicheren Information einer physikalischen Identität, wobei die physikalische Identität den Benutzer durch den Identitäten-Verwalter zugeordnet ist und den Benutzer gegenüber Dritten eindeutig identifiziert. Das zweite Zertifikat basiert auf einer sicheren Information einer sicheren Umgebung des mobilen Endgeräts.

Gemäß dem Konzept der vorliegenden Erfindung wird von dem Identitäten-Verwalter in Abhängigkeit von einem ersten Zertifikat und einem zweiten Zertifikat ein Authentisierungszertifikat erzeugt, mit dem sich der Benutzer des mobilen Endgeräts gegenüber Dritten authentisieren kann. Dabei identifiziert das erste Zertifikat den Benutzer des mobilen Endgeräts eindeutig, während das zweite Zertifikat die Authentizität der sicheren Umgebung des mobilen Endgeräts belegt. Das von dem Identitäten-Verwalter erzeugte Authentisierungszertifikat wird in der sicheren Umgebung des mobilen Endgeräts abgelegt und kann somit anschließend von dem Benutzer genutzt werden, um sich gegenüber Dritten zu authentisieren.

Weitere Ausführungsbeispiele der vorliegenden Erfindung schaffen ein mobiles Endgerät mit einer sicheren Umgebung, in der ein Authentisierungszertifikat zur Authentisierung eines Benutzers des mobilen Endgeräts abgelegt ist. Das Authentisierungszertifikat wird durch einen Identitäten-Verwalter in Abhängigkeit von einem ersten Zertifikat und einem zweiten Zertifikat erzeugt. Das erste Zertifikat basiert auf einer sicheren Information einer physikalischen Identität, die dem Benutzer durch den Identitäten-Verwalter zugeordnet ist und den Benutzer gegenüber Dritten eindeutig identifiziert. Das zweite Zertifikat basiert auf einer sicheren Information des mobilen Endgeräts.

Wie bereits erwähnt wird das Authentisierungszertifikat durch den Identitäten-Verwalter in Abhängigkeit von dem ersten Zertifikat und dem zweiten Zertifikat erzeugt. In Abhängigkeit kann sich dabei darauf beziehen, dass das Authentisierungszertifikat erzeugt wird, falls das erste Zertifikat und/oder das zweite Zertifikat gültig sind.

Ferner kann eine Abhängigkeit darin bestehen, dass ein Zertifikat (z.B. das Authentisierungszertifikat) basierend auf einem anderen Zertifikat (z.B. dem ersten Zertifikat oder dem zweiten Zertifikat) oder einer Information des anderen Zertifikats (z.B. eines durch das andere Zertifikat zertifizierten Schlüssels) erzeugt wird oder die Information des anderen Zertifikats zertifiziert.

Die sichere Umgebung des mobilen Endgeräts kann eine Umgebung sein, die durch kryptographische Methoden gegen unzulässige Zugriffe oder Manipulationen geschützt bzw. abgesichert ist, wie z.B. ein geschützter Datenbereich. Die sichere Umgebung kann einen sicheren Speicher bereitstellen. Ferner kann die sichere Umgebung kryptographische Operationen und/oder einen Programmcode ausführen. Beispielsweise kann die sichere Umgebung ein sicheres Element sein, das durch kryptographische Methoden gegen unzulässige Zugriffe oder Manipulationen abgesichert ist. Ferner kann das sichere Element ausgebildet sein, um kryptographische Schlüssel zu speichern, und um Signaturen zu berechnen. Die sichere Umgebung wird üblicherweise auch als "secure element" bezeichnet.

Die sichere Information der sicheren Umgebung des mobilen Endgeräts kann eine Information sein, die in der sicheren Umgebung des mobilen Endgeräts gespeichert ist oder von einer in der sicheren Umgebung gespeicherten Information abgeleitet ist. Beispielsweise kann die sichere Information der sicheren Umgebung ein kryptographischer Schlüssel sein, der in der sicheren Umgebung des mobilen Endgeräts gespeichert ist. Ferner kann die sichere Information der sicheren Umgebung eine Signatur oder ein Zertifikat sein, wobei die Signatur oder das Zertifikat unter Verwendung des kryptographischen Schlüssels durch die sichere Umgebung erzeugt bzw. generiert wurde. Ferner kann die sichere Information der sicheren Umgebung Daten umfassen, die in der sicheren Umgebung des mobilen Endgeräts gespeichert sind.

Die sichere Information der physikalischen Identität kann eine Information sein, die in der physikalischen Identität gespeichert ist oder von einer in der physikalischen Identität gespeicherten Information abgeleitet ist. Beispielsweise kann die sichere Information der physikalischen Identität ein kryptographischer Schlüssel sein, der in der physikalischen Identität gespeichert ist. Ferner kann die sichere Information der physikalischen Identität eine Signatur oder ein Zertifikat sein, wobei die Signatur oder das Zertifikat unter Verwendung des kryptographischen Schlüssels durch die physikalische Identität erzeugt bzw. generiert wurde. Ferner kann die sichere Information der physikalischen Identität Daten umfassen, die in der physikalischen Identität gespeichert sind.

Der Identitäten-Verwalter kann eine staatliche Einrichtung, eine staatlich überwachte Einrichtung oder eine vertrauenswürdige gewinnorientierte Einrichtung sein. Beispielsweise kann der Identitäten-Verwalter die Identitäten einer Gruppe von Benutzern, z.B. Bürger eines Staates, verwalten und an die Benutzer physikalische Identitäten, z.B. Ausweisdokumente, ausgeben, wobei die physikalischen Identitäten die Benutzer eindeutig identifizieren.

Das mobile Endgerät kann eine NFC fähige mobile Plattform sein. Das mobile Endgerät kann eine Netzwerkschnittstelle, einen Prozessor, das sichere Element, eine NFC-Steuereinheit und/oder eine Nahfeldantenne bzw. Nahbereichsantenne aufweisen. Die physikalische Identität kann eine berührungslose Schnittstelle aufweisen. Der Identitäten-Verwalter kann ein vertrauenswürdiger Identitätsanbieter sein.

Der Vorteil der Erfindung liegt in einer deutlich erhöhten Sicherheit der Authentisierung des Nutzers im Vergleich zu den zur Zeit eingesetzten Verfahren bei einer gleichzeitigen Erhöhung der Benutzerfreundlichkeit und der Flexibilität. Durch die Bindung von Identitätsinformationen an eine starke Identität (Chipkarte, neuer Personalausweis) und die Bindung der Identitäten an ein sicheres Element, können Identitätsdiebstahle verhindert werden und eine erhebliche Vertrauenssteigerung erreicht werden. Durch attributsbasierte und kontextsensitive Identitäten können für verschiedene Anwendungsfälle sehr flexible und jeweils an Szenarien angepasste Lösungen mit einer gleichzeitigen Rechtsverbindlichkeit ermöglicht werden.

Ausführungsbeispiele der vorliegenden Erfindung werden bezugnehmend auf die beiliegenden Figuren näher erläutert. Es zeigen:

Fig. 1    ein Flussdiagramm eines Verfahrens gemäß einem Ausführungsbeispiel der vorliegenden Erfindung;

Fig. 2    ein Interaktionsschaubild des mobilen Endgeräts, der physikalischen Identität und des Identitäten-Verwalters bei der Durchführung des Verfahrens, gemäß einem Ausführungsbeispiel der vorliegenden Erfindung;

Fig. 3    ein Interaktionsschaubild des mobilen Endgeräts, der physikalischen Identität und des Identitäten-Verwalters bei der Durchführung des Verfahrens, gemäß einem weiteren Ausführungsbeispiel der vorliegenden Erfindung; und

Fig. 4    ein Interaktionsschaubild des mobilen Endgeräts und eines Dritten bei der Durchführung des Verfahrens, gemäß einem Ausführungsbeispiel der vorliegenden Erfindung.

In den Figuren werden gleiche oder gleichwirkende Elemente mit dem gleichen Bezugszeichen versehen, so dass deren Beschreibung in den unterschiedlichen Ausführungsbeispielen untereinander austauschbar ist.

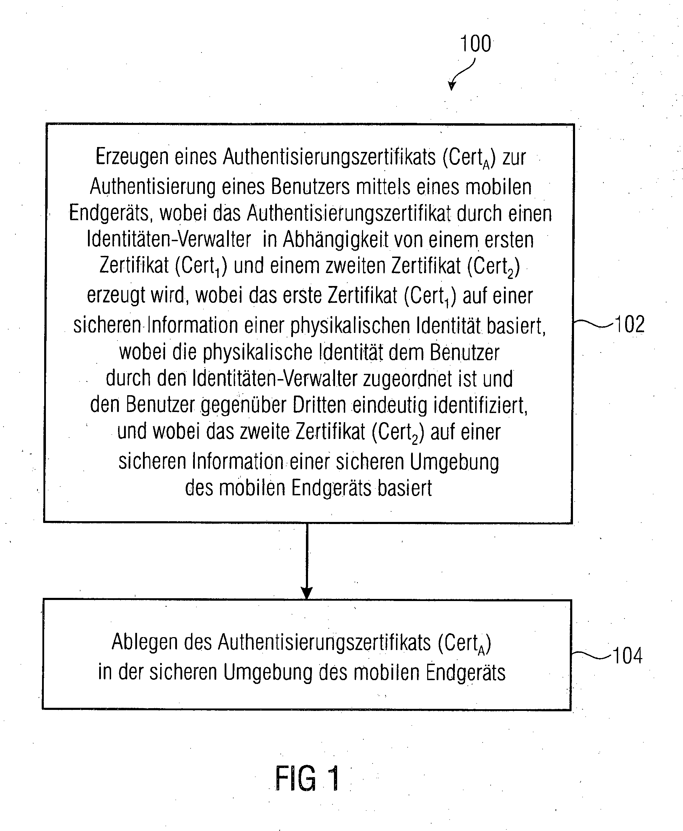

Fig. 1 zeigt ein Flussdiagramm eines Verfahrens 100 gemäß einem Ausführungsbeispiel der vorliegenden Erfindung. Das Verfahren 100 weist Erzeugen 102 eines Authentisierungszertifikats $Cert_A$ zur Authentisierung eines Benutzers mittels eines mobilen Endgeräts auf, wobei das Authentisierungszertifikat $Cert_A$ durch einen Identitäten-Verwalter in Abhängigkeit von einem ersten Zertifikat $Cert_1$ und einem zweiten Zertifikat $Cert_2$ erzeugt wird. Das erste Zertifikat $Cert_1$ basiert auf einer sicheren Information einer physikalischen Identität, die dem Benutzer durch den Identitäten-Verwalter zugeordnet ist und den Benutzer gegenüber Dritten eindeutig identifiziert. Das zweite Zertifikat $Cert_2$ basiert auf einer sicheren Information einer sicheren Umgebung des mobilen Endgeräts. Das Verfahren 100 weist ferner Ablegen 104 des Authentisierungszertifikats $Cert_A$ in der sicheren Umgebung des mobilen Endgeräts auf.

Bei Ausführungsbeispielen der vorliegenden Erfindung wird von dem Identitäten-Verwalter in Abhängigkeit von einem ersten Zertifikat $Cert_1$ und einem zweiten Zertifikat $Cert_2$ ein Authentisierungszertifikat $Cert_A$ erzeugt, mit dem sich der Benutzer des mobilen Endgeräts gegenüber Dritten authentisieren kann. Dabei identifiziert das erste Zertifikat $Cert_1$ den Benutzer des mobilen Endgeräts eindeutig, während das zweite Zertifikat $Cert_2$ die Authentizität der sicheren Umgebung des mobilen Endgeräts belegt. Das von dem Identitäten-Verwalter erzeugte Authentisierungszertifikat $Cert_A$ wird in der sicheren Umgebung des mobilen Endgeräts abgelegt und kann somit anschließend von dem Benutzer genutzt werden, um sich gegenüber Dritten zu Authentisieren.

Das erste Zertifikat $Cert_1$, mittels dem der Benutzer des mobilen Endgeräts eindeutig identifiziert werden kann, kann in der physikalischen Identität erzeugt bzw. generiert werden. Ferner ist es möglich, dass das erste Zertifikat $Cert_1$ bereits im Vorfeld durch den Identitäten-Verwalter, z.B. bei der Zuordnung der physikalischen Identität, erzeugt bzw. generiert und in der physikalischen Identität abgelegt bzw. gespeichert wird.

Das zweite Zertifikat $Cert_2$, mittels dem belegt werden kann, dass die sichere Umgebung des mobilen Endgeräts echt und authentisch ist, wird in der sicheren Umgebung des mobilen Endgeräts erzeugt.

Das Authentisierungszertifikat $Cert_A$ kann durch den Identitäten-Verwalter erzeugt werden, falls das erste Zertifikat $Cert_1$ und das zweite Zertifikat $Cert_2$ gültig sind. Das Authentisierungszertifikat $Cert_A$ wird somit nur dann erzeugt, falls der Benutzer des mobilen Endgeräts mittels des ersten Zertifikats $Cert_1$ eindeutig identifiziert werden kann und falls mittels des zweiten Zertifikats $Cert_2$ belegt werden kann, dass die sichere Umgebung des mobilen Endgeräts echt und authentisch ist.

Auf der physikalischen Identität kann die Hauptidentität des Benutzers abgelegt sein. Das erste Zertifikat $Cert_1$ enthält somit einen Hinweis auf die Hauptidentität des Benutzers des mobilen Endgeräts, die von dem Identitäten-Verwalter überprüft werden kann.

Die Hauptidentität des Benutzers kann die reale Identität des Benutzers sein. Ferner kann die Hauptidentität eine Identität sein, die dem Benutzer durch den Identitäten-Verwalter eindeutig zugeordnet ist.

Beispielsweise kann die physikalische Identität ein Ausweisdokument, z.B. ein Personalausweis, sein, mit der sich der Benutzer des mobilen Endgeräts herkömmlicherweise nicht nur gegenüber dem Identitäten-Verwalter sondern auch gegenüber Dritten authentisiert.

Der Identitäten-Verwalter kann die Identität des Benutzers des mobilen Endgeräts mittels des ersten Zertifikats $Cert_1$ überprüfen und in Abhängigkeit von dem ersten Zertifikats $Cert_1$ (und des zweiten Zertifikats $Cert_2$) das Authentisierungszertifikat $Cert_A$ erzeugen. Das Authentisierungszertifikat $Cert_A$ kann die reale Identität bzw. Hauptidentität des Benutzers des mobilen Endgeräts in verschleierter bzw. verschlüsselter Form aufweisen, so dass zur Authentisierung gegenüber Dritten nicht die Hauptidentität, sondern lediglich eine Pseudoidentität, z.B. ein Pseudonym, Anmeldename, Aliasname oder Deckname, preisgegeben wird.

Mit anderen Worten, Ausführungsbeispiele schaffen ein Konzept zur Ableitung von Identitäten ausgehend von einer physikalischen Identität bzw. Hauptidentität für verschiedene Kontexte unter Rückgriff eines Identitäten-Verwalters, z.B. eines vertrauenswürdigen Identitätsanbieters. Mit Hilfe eines mobilen Endgeräts und einer Identifizierungskomponente, können für verschiedene Kontexte, Identitäten mit spezifischen Attributen generiert und auf einem mobilen Endgerät abgespeichert werden.

Beispielsweise können ausgehend von dieser Hauptidentität für verschiedene Szenarien Identitäten abgeleitet werden. Die Ableitung kann dann direkt bei dem Nutzer oder durch den ID-Dienst (ID = Identifikation) jeweils unter Rückgriff auf die gespeicherte Hauptidentität bei einem vertrauenswürdigen Identitätsanbieter geschehen. Als vertrauenswürdige Komponente, um sich gegenüber dem vertrauenswürdigen Identitätsanbieter identifizieren zu können, kann eine Chipkarte, wie beispielsweise der neue Personalausweis, verwendet werden. Ausgehend von dem neuen Personalausweis (der in einer sicheren Umgebung bei einem Nutzer gehalten wird, wie einem Tresor) können Identitäten für verschiedene Szenarien abgeleitet werden.

Diese Identitäten, im Folgenden als Authentisierungstoken bezeichnet, können mit unterschiedlichen Attributen (z.B. Finanztransaktion, Kontonummer, Pseudonym, Gültigkeit, Alter des Inhabers, Geburtsdatum) verknüpft und auf einem (möglicherweise auch unsicheren) mobilen Gerät gespeichert werden. Dieser Ansatz erlaubt ebenfalls die Bindung von Identitäten an verschiedene Geräte. Bei Verlust des mobilen Endgeräts kann unter Rückgriff der Hauptidentität eine Sperrung der abgeleiteten Identitäten vorgenommen werden. Die abgeleiteten Identitäten können dazu mit entsprechenden Sicherheitsmerkmalen (Signatur, möglicherweise unter Einbeziehung eines Signaturdienstes des vertrauenswürdigen Identitätsanbieters) ausgestattet werden, um eine vertrauenswürdige Generierung nachzuweisen.

Zur Authentisierung und Identifizierung gegenüber einem dritten Dienst ist lediglich die Übertragung der Authentisierungsdaten erforderlich. Die Gültigkeit kann dazu von einer Gegenstelle ebenfalls möglicherweise unter Einbeziehung des vertrauenswürdigen Identitätsanbieters, geprüft werden.

Hierzu können auf dem mobilen Gerät in einer sicheren Umgebung, z.B. auf einem sicheren Element, Authentisierungstoken bzw. Authentisierungszertifikate $Cert_A$ gespeichert werden. Zur Verifikation der Identität wird das Authentisierungstoken an eine Gegenstelle übertragen. Hier muss das mobile Endgerät grundsätzliche Sicherheitsmechanismen zur Verfügung stellen, um Manipulationen an den Authentisierungstokens zu verhindern.

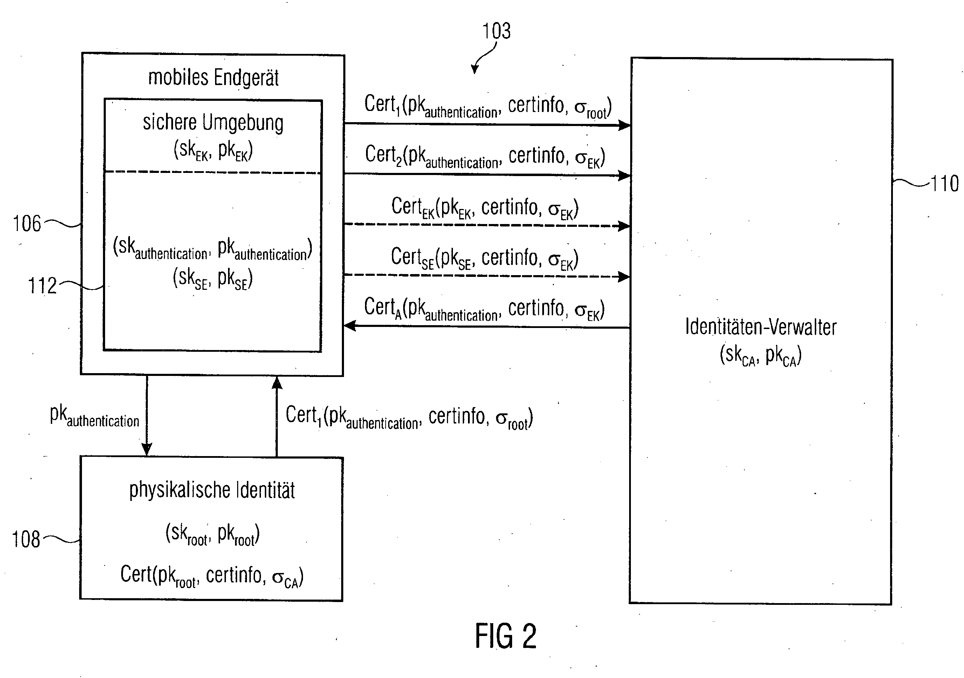

Im Folgenden werden Ausführungsbeispiele des Verfahrens 100 anhand der Fig. 2 bits 4 näher erläutert.

Fig. 2 zeigt ein Interaktionsschaubild des mobilen Endgeräts 106, der physikalischen Identität 108 und des Identitäten-Verwalters 110 bei der Durchführung des Verfahrens 100.

Das mobile Endgerät 106 weist eine sichere Umgebung 112 auf, in der das Authentisierungszertifikat $Cert_A$ zur Authentisierung des Benutzers des mobilen Endgeräts 106 abgelegt ist. Wie bereits erwähnt, wird das Authentisierungszertifikat $Cert_A$ durch den Identitäten-Verwalter 110 in Abhängigkeit von dem ersten Zertifikat $Cert_1$ und dem zweiten Zertifikat $Cert_2$ erzeugt. Das erste Zertifikat $Cert_1$ basiert auf der sicheren Information der physikalischen Identität 108, die dem Benutzer durch den Identitäten-Verwalter 110 zugeordnet ist und den Benutzer gegenüber Dritten eindeutig identifiziert. Das zweite Zertifikat $Cert_2$ basiert auf der sicheren Information des mobilen Endgeräts 106.

Wie bereits erwähnt, kann das erste Zertifikat $Cert_1$, das zur eindeutigen Identifikation des Benutzers des mobilen Endgeräts 106 dient, in der physikalischen Identität 108 erzeugt werden.

Hierzu kann das Verfahren 100 ferner (einen Schritt des) Generierens eines ersten asymmetrischen Schlüsselpaars mit einem ersten öffentlichen Schlüssel $pk_{authentication}$ aufweisen, wobei das erste asymmetrische Schlüsselpaar in der sicheren Umgebung 112 des mobilen Endgeräts 106 generiert wird, und wobei zumindest eines aus dem ersten Zertifikat $Cert_1$, dem zweiten Zertifikat $Cert_2$ oder dem Authentisierungszertifikat $Cert_A$ von dem ersten öffentlichen Schlüssel $pk_{authentication}$ abhängig ist.

Das erste asymmetrische Schlüsselpaar kann ferner einen ersten privaten Schlüssel $sk_{authentication}$ aufweisen. Das erste asymmetrische Schlüsselpaar kann einem spezifischen Kontext zugewiesen sein bzw. für einen spezifischen Kontext (Zusammenhang) generiert werden.

Beispielsweise kann der spezifische Kontext, für den das erste asymmetrische Schlüsselpaar genutzt werden kann, die Identifizierung und/oder Authentisierung gegenüber einer Behörde, einem Finanzinstitut, einem Kommunikationsanbieter (z.B. E-Mailanbieter, Telekommunikationsanbieter), einem sozialen Netzwerk, einem Versandhändler, usw. sein. Beispielsweise kann zur Identifizierung und/oder Authentisierung gegenüber einem Finanzinstitut, z.B. für die Durchführung von Finanztransaktionen, ein erstes asymmetrisches Schlüsselpaar mit einem ersten öffentlichem Schlüssel $pk_{finance}$ und einem ersten privaten Schlüssel $sk_{finance}$ generiert werden.

Natürlich kann das Verfahren auch das Generieren weiterer asymmetrischer Schlüsselpaare umfassen. Beispielsweise kann ein erstes asymmetrisches Schlüsselpaar für einen ersten Kontext (z.B. Identifizierung gegenüber einem Finanzinstitut), ein zweites asymmetrisches Schlüsselpaar für einen zweiten Kontext (z.B. Identifizierung gegenüber einer Behörde) und ein drittes asymmetrisches Schlüsselpaar für einen dritten Kontext (z.B. Zugang zu einem E-Mailkonto) generiert werden.

Das erste Zertifikat $Cert_1$ kann durch Signieren des ersten öffentlichen Schlüssels $pk_{authentication}$ unter Verwendung eines privaten Schlüssels $sk_{root}$ der physikalischen Identität 108 erzeugt werden.

Die sichere Information der physikalischen Identität 108, auf der das erste Zertifikat $Cert_1$ basiert, kann der private Schlüssel $sk_{root}$ der physikalischen Identität 108 oder eine davon abgeleitete Information sein. Der private Schlüssel $sk_{root}$ kann der physikalischen Identität 108 durch den Identitäten-Verwalter 110 zugeordnet sein.

Wie in Fig. 2 gezeigt ist, kann zur Generierung des ersten Zertifikats $Cert_1$ der erste öffentliche Schlüssel $pk_{authentication}$ drahtlos an die physikalische Identität 108 übertragen werden. Die physikalische Identität 108 kann den ersten öffentliche Schlüssel $pk_{authentication}$ unter Verwendung des privaten Schlüssels $sk_{root}$ der physikalischen Identität 108 Signieren, um das erste Zertifikat $Cert_1$ zu erhalten. Das erste Zertifikat $Cert_1$ kann anschließend drahtlos an das mobile Endgerät 106 übertragen werden und z.B. in der sicheren Umgebung 112 des mobilen Endgeräts 106 abgelegt bzw. gespeichert werden.

Das erste Zertifikat $Cert_1$ kann somit die Schreibweise $Cert_1(pk_{authentication}, certinfo, \sigma_{root})$ aufweisen, wobei $\sigma_{root}$ die Signatur der physikalische Identität 108 ist, und wobei certinfo ein optionales Feld ist, das zusätzliche Informationen, wie z.B. Zertifizierungsinformationen oder eine Seriennummer, aufweisen kann.

Zur drahtlosen Übertragung des ersten öffentlichen Schlüssels $pk_{authentication}$ von dem mobilen Endgerät 106 an die physikalische Identität 108 und/oder des ersten Zertifikats $Cert_1$ von der physikalischen Identität 108 an das mobile Endgerät 106 kann ein NFC Übertragungsstandard verwendet werden (NFC = Near Field Communication, dt. Nahbereichskommunikation).

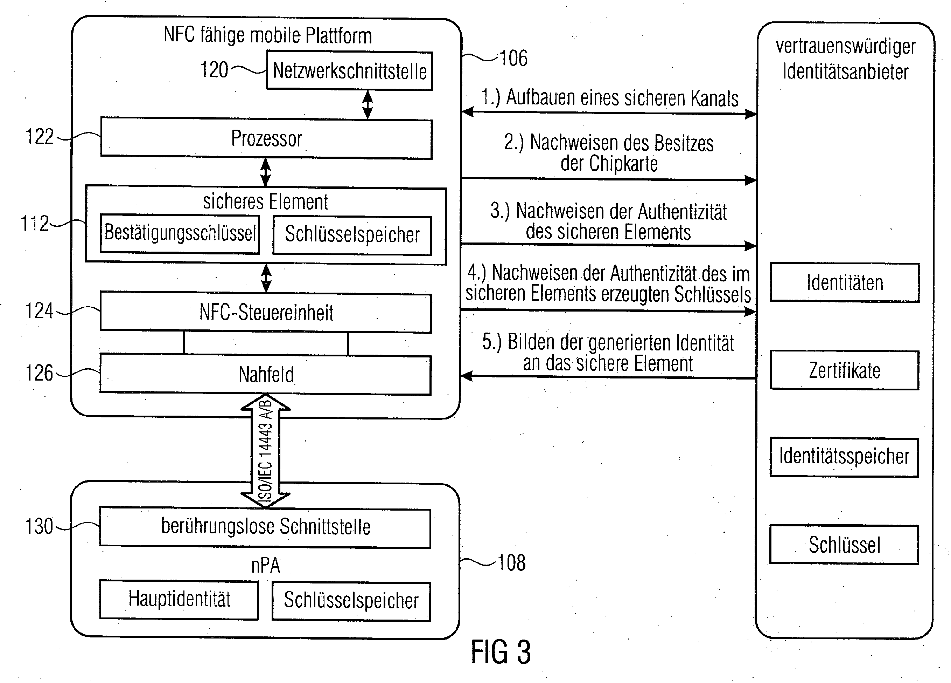

Beispielsweise kann das mobile Endgerät 106 ein NFC Modul aufweisen (siehe Fig. 3), um eine drahtlose Datenübertragung zwischen dem mobilen Endgerät 106 und der physikalischen Identität 108 zu ermöglichen.

Alternativ zu der Erzeugung des ersten Zertifikats $Cert_1$ in der physikalischen Identität 108 kann das erste Zertifikat $Cert_1$ durch den Identitäten-Verwalter 110 in der physikalischen Identität 108 (im Vorfeld) abgelegt sein.

Beispielsweise kann der Identitäten-Verwalter 110 bei der Zuordnung bzw. Zuweisung der physikalischen Identität 108 zu dem Benutzer das erste Zertifikat $Cert_1$ erzeugen und in der physikalischen Identität 108 ablegen. Der Identitäten-Verwalter 110 kann z.B. den privaten Schlüssel $pk_{root}$ mit seinem privaten Schlüssel $sk_{CA}$ (privater Schlüssel $sk_{CA}$ des Identitäten-Verwalters 110) Signieren, um das erste Zertifikat $Cert_1$ zu erhalten.

Das erste Zertifikat $Cert_1$ kann somit (alternativ) die Schreibweise $Cert_1(pk_{root}, certinfo, \sigma_{CA})$ aufweisen, wobei $\sigma_{CA}$ die Signatur des Identitäten-Verwalters 110 ist, und wobei certinfo ein optionales Feld ist, das zusätzliche Informationen, wie z.B. Zertifizierungsinformationen oder eine Seriennummer, aufweisen kann.

Wie bereits erwähnt, kann das zweite Zertifikat $Cert_2$, mittels dessen belegt werden kann, dass die sichere Umgebung 112 des mobilen Endgeräts 106 echt und authentisch ist, in der sicheren Umgebung 112 des mobilen Endgeräts 106 erzeugt werden.

Das zweite Zertifikat $Cert_2$ kann durch Signieren des ersten öffentlichen Schlüssels $pk_{authentication}$ unter Verwendung eines privaten Bestätigungsschlüssels $sk_{EK}$ der sicheren Umgebung 112 des mobilen Endgeräts 106 erzeugt werden.

Die sichere Information der sicheren Umgebung 112 des mobilen Endgeräts 106, auf der das zweite Zertifikat $Cert_2$ basiert, kann der private Bestätigungsschlüssel $sk_{EK}$ oder eine davon abgeleitete Information sein. Der sichereren Umgebung 112 des mobilen Endgeräts 106 kann der private Bestätigungsschlüssel $sk_{EK}$ durch einen Schlüssel-Verwalter dauerhaft zugeordnet sein.

Ferner kann der sicheren Umgebung 112 des mobilen Endgeräts 106 ein öffentlicher Bestätigungsschlüssel

$pk_{EK}$ durch den Schlüssel-Verwalter dauerhaft zugeordnet sein.

Der Bestätigungsschlüssel ($sk_{EK}$, $pk_{EK}$) kann genau einem sicheren Element eindeutig zugeordnet sein, z.B. durch den Schlüssel-Verwalter. Herkömmlicherweise wird der Bestätigungsschlüssel auch als "endorsement key (EK)" bezeichnet.

Der öffentliche Bestätigungsschlüssel $pk_{EK}$ kann durch den Schlüssel-Verwalter mittels eines ersten Bestätigungszertifikats $Cert_{EK}$ zertifiziert sein, wobei das erste Bestätigungszertifikat $Cert_{EK}$ die sichere Umgebung 112 des mobilen Endgeräts 106 eindeutig identifiziert.

Mittels des Bestätigungszertifikats $Cert_{EK}$ kann somit die Authentizität der sicheren Umgebung 112 des mobilen Endgeräts 106 belegt bzw. nachgewiesen oder bewiesen werden.

Beispielsweise kann die sichere Umgebung 112 des mobilen Endgeräts 106 ein sicheres Element sein, wobei der öffentliche Bestätigungsschlüssel $pk_{EK}$ und/oder der private Bestätigungsschlüssel $sk_{EK}$ von dem Hersteller des sicheren Elements (Schlüssel-Verwalter) bei der Erstellung bzw. Herstellung des sicheren Elements in das sichere Element eingebracht werden.

Ferner kann der öffentliche Bestätigungsschlüssel $pk_{EK}$ von dem Hersteller des sicheren Elements zertifiziert sein, um das erste Bestätigungszertifikat $Cert_{EK}$ zu erhalten.

Das zweite Zertifikat $Cert_2$ kann somit die Schreibweise $Cert_2(pk_{authentication}, certinfo, \sigma_{EK})$ aufweisen, wobei $\sigma_{EK}$ eine Bestätigungssignatur der sicheren Umgebung 112 des mobilen Endgeräts 106 ist, und wobei certinfo ein optionales Feld ist, das zusätzliche Informationen, wie z.B. zusätzliche Zertifizierungsinformationen oder eine Seriennummer, aufweisen kann.

Wie bereits erwähnt kann das Authentisierungszertifikat $Cert_A$ von dem Identitäten-Verwalter 110 erzeugt werden, falls das erste Zertifikat $Cert_1$ und das zweite Zertifikat $Cert_2$ gültig sind.

Wie in Fig. 2 gezeigt ist, können das erste Zertifikat $Cert_1$ und das zweite Zertifikat $Cert_2$ von dem mobilen Endgerät 106 an den Identitäten-Verwalter 110 übermittelt werden. Der Identitäten-Verwalter 110 kann den ersten öffentlichen Schlüssel $pk_{authentication}$ aus dem ersten Zertifikat $Cert_1$ und/oder dem zweiten Zertifikat $Cert_2$ extrahieren. Ferner kann das Bestätigungszertifikat $Cert_A$ durch den Identitäten-Verwalter 110 durch Signieren des ersten öffentlichen Schlüssels $pk_{authentication}$ unter Verwendung eines eigenen privaten Schlüssel $sk_{CA}$ (privater Schlüssel $sk_{CA}$ des Identitäten-Verwalters 110) erzeugt werden.

Das Authentisierungszertifikat $Cert_A$ kann somit die Schreibweise $Cert_A(pk_{authentication}, certinfo, \sigma_{CA})$ aufweisen, wobei $\sigma_{CA}$ die Signatur des Identitäten-Verwalters 110 ist, und wobei certinfo ein optionales Feld ist, das zusätzliche Informationen, wie z.B. zusätzliche Zertifizierungsinformationen oder eine Seriennummer, aufweisen kann.

Das Authentisierungszertifikat $Cert_A$ kann anschließend von dem Identitäten-Verwalter 110 an das mobile Endgerät 106 übermittelt werden und in der sicheren Umgebung 112 des mobilen Endgeräts 106 abgelegt werden.

Ferner ist es möglich, das Authentisierungszertifikat $Cert_A$ verschlüsselt von dem Identitäten-Verwalter 110 an das mobile Endgerät 106 zu übertragen. Hierzu kann der Identitäten-Verwalter 110 das Authentisierungszertifikat $Cert_A$ mit dem ersten öffentlichen Schlüssel $pk_{authentication}$ verschlüsseln, um ein verschlüsseltes Authentisierungszertifikat $Cert_A^*$ zu erhalten.

Anschließend kann das verschlüsselte Authentisierungszertifikat $Cert_A^*$ an das mobile Endgerät 106 übermittelt werden, wobei das mobile Endgerät 106 das verschlüsselte Authentisierungszertifikat $Cert_A^*$ mit einem ersten privaten Schlüssel $sk_{authentication}$ des ersten asymmetrischen Schlüsselpaars in der sicheren Umgebung 112 des mobilen Endgeräts 106 entschlüsseln kann, um das Authentisierungszertifikat $Cert_A$ zu erhalten.

Wie bereits oben ausgeführt, kann der Identitäten-Verwalter 110 das Authentisierungszertifikat $Cert_A$ erzeugen, falls das erste Zertifikat $Cert_1$ und das zweite Zertifikat $Cert_2$ gültig sind.

Zur Erhöhung der Sicherheit können zusätzlich das erste Bestätigungszertifikat $Cert_{EK}$ und/oder ein zweites Bestätigungszertifikat $Cert_{SE}$ an den Identitäten-Verwalter 110 übermittelt werden, wobei der Identitäten-Verwalter 110 das erste Bestätigungszertifikat $Cert_{EK}$ und/oder das zweite Bestätigungszertifikat $Cert_{SE}$ überprüft und das Authentisierungszertifikat $Cert_A$ erzeugt, falls das erste Bestätigungszertifikat $Cert_{SE}$ und/oder das zweite Bestätigungszertifikat $Cert_{SE}$ gültig sind.

Das erste Bestätigungszertifikat $Cert_{EK}$ zertifiziert dabei, wie bereits oben ausführlich beschrieben, den privaten Bestätigungsschlüssel $sk_{EK}$ der sicheren Umgebung 112 des mobilen Endgeräts 106. Bei der Herstellung der sicheren Umgebung 112 kann das erste Bestätigungszertifikat $Cert_{EK}$ durch den Schlüssel-Verwalter (z.B. Hersteller der sicheren Umgebung 112) der sicheren Umgebung 112 dauerhaft zugeordnet und in der sicheren Umgebung 112 abgelegt werden. Mittels des ersten Bestätigungszertifikats $Cert_{EK}$ wird somit eine eindeutige Identifizierung der sicheren Umgebung 112 des mobilen Endgeräts 106 ermöglicht.

Das erste Bestätigungszertifikat $Cert_{EK}$ kann die Schreibweise $Cert_{EK}(pk_{EK}, certinfo, \sigma_{EK})$ aufweisen, wobei $\sigma_{EK}$ eine erste Bestätigungssignatur (Signatur des Schlüssel-Verwalters) ist, und wobei certinfo ein optionales Feld ist, das zusätzliche Informationen, wie z.B. zusätzliche Zertifizierungsinformationen oder eine Seriennummer, aufweisen kann.

Zur Erzeugung des zweiten Bestätigungszertifikats $Cert_{SE}$ kann in der sicheren Umgebung 112 des mobilen Endgeräts 106 zunächst ein zweites asymmetrisches Schlüsselpaar mit einem zweiten öffentlichen Schlüssel $pk_{SE}$

generiert werden. Das zweite asymmetrische Schlüsselpaar kann ferner einen zweiten privaten Schlüssel $sk_{SE}$ aufweisen.

Anschließend kann ein zweites Bestätigungszertifikat $Cert_{SE}$ durch Signieren des zweiten öffentlichen Schlüssels $pk_{SE}$ unter Verwendung des privaten Bestätigungsschlüssels $sk_{EK}$ erzeugt werden.

Das zweite Bestätigungszertifikat $Cert_{SE}$ kann die Schreibweise $Cert_{SE}(pk_{SE},certinfo,\sigma_{EK})$ aufweisen, wobei $\sigma_{EK}$ eine zweite Bestätigungssignatur (Signatur der sicheren Umgebung 112 des mobilen Endgeräts 106) ist, und wobei certinfo ein optionales Feld ist, das zusätzliche Informationen, wie z.B. zusätzliche Zertifizierungsinformationen oder eine Seriennummer, aufweisen kann.

Fig. 3 zeigt ein Interaktionsschaubild des mobilen Endgeräts 106, der physikalischen Identität 108 und des Identitäten-Verwalters 110 bei der Durchführung des Verfahrens 100, gemäß einem weiteren Ausführungsbeispiel der vorliegenden Erfindung.

Das mobile Endgerät 106 kann eine NFC fähige mobile Plattform sein, die eine Netzwerkschnittstelle 120, einen Prozessor 122, das sichere Element 112, eine NFC-Steuereinheit 124 und eine Nahfeldantenne bzw. Nahbereichsantenne 126 aufweist. Die physikalische Identität 108 kann eine berührungslose Schnittstelle 130 aufweisen. Der Identitäten-Verwalter 110 kann ein vertrauenswürdiger Identitätsanbieter sein.

Zur Erzeugung des Authentisierungszertifikats $Cert_A$ kann in einem ersten Schritt ein sicherer Kanal 113 zwischen dem mobilen Endgerät 106 und dem Identitäten-Verwalter 110 aufgebaut werden. In einem zweiten Schritt kann ein Nachweis über den Besitz der physikalischen Identität (z.B. Chipkarte) erbracht werden. In einem dritten Schritt kann ein Nachweis über die Authentizität des sicheren Elements 112 erbracht werden. In einem vierten Schritt kann ein Nachweis über die Authentizität des im sicheren Element 112 erzeugten Schlüssels erbracht werden. In einem fünften Schritt kann das Authentisierungszertifikat $Cert_A$ (z.B. die generierte Identität) an das sichere Element 112 gebunden werden.

Im Folgenden, wird davon ausgegangen, dass die physikalische Identität 108 eine Chipkarte, z.B. ein hoheitliches als Chipkarte ausgeführtes Identitätsdokument, z.B. der deutsche neue Personalausweis (nPA) oder elektronische Aufenthaltstitel (eAT), ist. Ferner wird davon ausgegangen, dass ein Authentisierungszertifikat $Cert_A$ durch den Identitäten-Verwalter für einen Finanzkontext erzeugt wird.

Zur Ausführung kann eine NFC fähige mobile Plattform 106 zum Einsatz kommen, die über ein sicheres Element 112 verfügt. Das sichere Element 112 weist dabei einen speziellen Schlüssel auf, mit dem es in der Lage ist, seine Authentizität zu belegen (vgl. Bestätigungsschlüssel). Zur Authentisierung gegenüber dem vertrauenswürdigen Identitätsanbieter 110 kann eine Chipkarte (beispielsweise der neue Personalausweis, (nPA)) verwendet werden. Eine Hauptidentität (realisiert durch ein kryptographisches asymmetrisches Schlüsselpaar) wurde dazu auf der Chipkarte 108 durch den vertrauenswürdigen Identitätsanbieter 110 erzeugt ($sk_{root}$,$pk_{root}$) und ein entsprechendes Zertifikat ($Cert(pk_{root},certinfo,\sigma_{CA})$) durch den vertrauenswürdigen Identitätsanbieter 110 erstellt und auf der Chipkarte 108 abgelegt. Die Annahme ist hierbei, dass diese Erzeugung in einer gesicherten Umgebung des vertrauenswürdigen Identitätsanbieters 110 geschieht. Das Zertifikat beinhaltet ein certinfo Feld, das Informationen über den Kontext als auch weitere Zertifizierungsinformationen wie eine Seriennummer, oder Informationen über die CA (CA = Certificate Authority, dt. Zertifikatsbehörde bzw. Identitäten-Verwalter 110) enthält, $\sigma_{CA}$ ist die Signatur der CA. Ferner weist der vertrauenswürdige Identitätsanbieter 110 ein eigenes Schlüsselpaar ($sk_{CA}$, $pk_{CA}$) auf, mit dem die Zertifikate entsprechend ausgestellt werden.

Zur Erzeugung von Identitäten für spezifische Kontexte kann ein verschlüsselter und authentisierter Kanal 113 zum vertrauenswürdigen Identitätsanbieter 110 aufgebaut werden. Der Kanal 113 wird dazu unter Rückgriff auf die in der Chipkarte 108 abgelegte Hauptidentität und eines im sicheren Element 108 abgelegten Schlüssels erzeugt. Das dazu erforderliche und im sicheren Element 112 abgelegte Schlüsselpaar kann sowohl beim Herstellungsprozess der mobilen Plattform 106 generiert werden oder auch erst bei der Etablierung des Kanals 113, der als sicherer Kanal, wie z.B. als TLS-Kanal (TLS = Transport Layer Security, dt. Transportschicht Sicherheit), ausgeführt werden kann, erzeugt werden. Dies ist für die Erstellung des verschlüsselten Kanals 113 zunächst von untergeordneter Relevanz, da lediglich ein Nachweis übermittelt werden kann, dass der generierte Schlüssel in einem sicheren Element 112 gehalten wird. Dies kann über einen entsprechenden Bestätigungsschlüssel nebst zugehörigem Bestätigungszertifikat geschehen, wie dies weiter unten beschrieben ist.

Der Aufbau des verschlüsselten Kanals 113 zum vertrauenswürdigen Identitätsanbieter 110 erfolgt beispielsweise dadurch, dass beim Aufbau des TLS-Kanals bei der Übermittlung der Client-Zertifikat-Nachricht sowohl das Zertifikat der Chipkarte ($Cert(pk_{root},certinfo,\sigma_{CA})$) als auch das Zertifikat der mobilen Plattform 106 übermittelt werden. Die im ersten Schritt übermittelten Zufallszahlen können dazu von beiden Schlüsseln im Rahmen einer Zertifikat-Verifizierungs-Nachricht signiert werden.

Auf dem sicheren Element 112, das sich in dem mobilen Endgerät 106 befindet, z.B. realisiert als UICC (UICC = Universal Integrated Circuit Card, dt. universelle Chipkarte), eingebettetes sicheres Element oder externe SD-Karte (SD = Secure Digital, dt. sichere digitale), wird für einen spezifischen Kontext (hier am Beispiel eines Finanzkontext) ein entsprechendes Schlüsselpaar generiert ($sk_{finance}$, $pk_{finance}$) und mit dem entsprechenden Bestätigungsschlüssel zertifiziert, wie dies weiter unten ausführlich beschrieben ist. Der Finanzkontext ist hierzu abstrahiert und in seiner Ausprägung kompatibel zu dem EMV-Standard, so dass auch neue Finanztransaktionen nach EMV möglich sind. Abstrahiert kann sich dabei darauf beziehen, dass zur Umsetzung des EMV-Standards ein kryptographisches Schlüsselpaar benötig wird, welches (wie oben beschrieben) generiert werden kann, um den EMV-Standard umzusetzen bzw. um kompatibel zum EMV-Standard zu sein. Dazu wird ein verschlüsselter und authentisierter Kommunikationskanal über NFC mit der Chipkarte 108 aufgebaut und der öffentliche Schlüssel ($pk_{finance}$) an die Chipkarte 108 übertragen. Die Chipkarte 108 zertifiziert den Schlüssel und überträgt das Zertifikat über NFC zurück zum sicheren Element 112 ($Cert(pk_{finance},certinfo,\sigma_{root})$). Es kann dabei sichergestellt werden, dass die direkte Nähe (z.B. ein Abstand von weniger als 10 cm, 4 cm oder 1 cm) zu der Chipkarte 108 vorliegt weshalb ein zweiter Authentisierungsmechanismus, wie beispielsweise eine PIN-Eingabe auf dem mobilen Endgerät 106, der die Chipkarte 108 zunächst freischaltet, durchgeführt wurde. Relay-Angriffe können dadurch effektiv verhindert werden. Zur verschlüsselten Kommunikation zwischen dem mobilen Endgerät 106 und der Chipkarte 108 bieten sich Verfahren wie beispielsweise PACE (PACE = Password Authenticated, Connection Establishment, dt. passwortauthentisierter Verbindungsaufbau) an, wobei PACE zum Verbindungsaufbau dient, und wobei die verschlüsselte Kommunikation erst dann ausgeführt wird, wenn PACE bereits erfolgreich war.

Nach der Durchführung dieser Zertifizierungsschritte besitzt das sichere Element 112 zu dem Schlüsselpaar ($sk_{finance},pk_{finance}$) zwei Zertifikate. Ein Zertifikat über die Bindung des Schlüssels an eine Hauptidentität, d.h. ($Cert_1(pk_{finance},certinfo,\sigma_{root})$), und ein weiteres Zertifikat, das belegt, dass das generierte Schlüsselpaar in einem sicheren Element 112 gehalten wird ($Cert_2(pk_{finance},certinfo,\sigma_{EK})$). Die generierten Zertifikate (z.B. $Cert_1$ und $Cert_2$) werden über den verschlüsselten Kanal 113 an den vertrauenswürdigen Identitätsanbieter 110 nebst Kontextinformationen und Attributen übermittelt. Der vertrauenswürdige Identitätsanbieter 110 überprüft die Authentizität aller Zertifikate und erstellt eine Identität für den angefragten Kontext indem er ein Zertifikat für den erzeugten Schlüssel ($Cert_A(pk_{finance,}\ certinfo,\sigma_{CA})$) erzeugt und an das sichere Element 112 mit $pk_{finance}$ verschlüsselt übermittelt. Da das Zertifikat verschlüsselt wird, ist sichergestellt, dass es nur in einer nachweislich geschützten Umgebung, d.h. dem sicheren Element 112, zu entschlüsseln ist und dass der erzeugte Schlüssel $sk_{finance}$ in einem geschützten Speicherbereich abgelegt ist. Nachweislich geschützt bedeutet dabei, dass das Zertifikat bzw. der private Schlüssel für das Zertifikat in dem geschützten Speicherbereich des sicheren Elements liegt und nur dort entschlüsselt werden kann. Das Feld certinfo beinhaltet in diesem Fall die Attribute für eine spezifische Sitzung, wie Gültigkeit oder Kontextinformationen.

Zur Gewährleistung der Authentizität des im sicheren Element 112 generierten Schlüsselpaars kann folgendes Verfahren benutzt werden. Das sichere Element 112 kann einen sogenannten Bestätigungsschlüssel aufweisen, der bei Erstellung des sicheren Elements 112 vom Hersteller in das sichere Element 112 eingebracht wird. Der Bestätigungsschlüssel wird mit einem herstellerspezifischen kryptographischen Schlüssel signiert und somit ein Zertifikat, im Folgenden Bestätigungszertifikat, mit näheren Informationen über die Plattform 106 (z.B.: Modell, Versionsnummer, Gemeinsame-Kriterien Zertifikatsstufe) erstellt. Das Bestätigungszertifikat belegt, dass es sich um ein authentisches sicheres Element 112 mit spezifischen Eigenschaften handelt. Zum Nachweis, dass ein Schlüssel in einem sicheren Element 112 gehalten wird, generiert das sichere Element 112 ein Schlüsselpaar ($sk_{SE},pk_{SE}$) und signiert den öffentlichen Schlüssel mit dem Bestätigungsschlüssel und generiert so ein Zertifikat $Cert_{SE}(pk_{SE},certinfo,\sigma_{EK})$. Der private Schlüssel wird dabei nur im sicheren Element 112 gehalten. Das Zertifikat ($Cert_{SE}(pk_{SE},certinfo,\sigma_{EK})$) kann dann nebst Bestätigungszertifikat an den vertrauenswürdigen Identitätsanbieter 110 (oder eine Dritte Instanz) übermittelt werden, um die Authentizität des sicheren Elements 112 zu prüfen. Der vertrauenswürdige Identitätsanbieter 110 (oder eine Dritte Instanz) prüft die Signaturen (z.B. die Signatur $\sigma_{root}$ des Zertifikats $Cert)(pk_{authentication},certinfo,\sigma_{root})$, die Signatur $\sigma_{EK}$ des Zertifikats $Cert_2(pkauthentication,certinfo,\sigma root)$, die Signatur $\sigma_{EK}$ des Zertifikats $Cert_{EK}(pk_{EK},certinfo,\sigma_{EK})$ und/oder die Signatur $\sigma_{EK}$ des Zertifikats $Cert_{SE}(pk_{SE},certinfo,\sigma_{EK})$) und kann nun den öffentlichen Schlüssel erneut zertifizieren und ein Zertifikat mit spezifischen Eigenschaften erstellen. Dieses Zertifikat wird mit dem öffentlichen Schlüssel $pk_{SE}$ verschlüsselt und zurück an das sichere Element übermittelt. Zur Steigerung der Effizienz sind ebenfalls hybride Verschlüsselungsverfahren möglich bei denen ein symmetrischer Sitzungsschlüssel durch den vertrauenswürdigen Identitätsanbieter 110 (oder eine Dritte Instanz) generiert wird mit dem das Zertifikat übermittelt wird. In diesem Fall wird lediglich der Sitzungsschlüssel mit dem öffentlichen Schlüssel $pk_{SE}$ verschlüsselt. Da alleine das sichere Element 112, auf dem der korrespondierende private Schlüssel gehalten wird diese Nachricht entschlüsseln kann, ist sichergestellt, dass das Zertifikat nur auf einem authentischen sicheren Element 112 nutzbar ist, d.h. einem sicheren Element, welches von einem Hersteller stammt, der vertrauenswürdig ist (was z.B. von dem vertrauenswürdigen Identitäts-Anbieter überprüft werden kann), und dass der Schlüssel spezifische Eigenschaften (z.B. dass der Schlüssel in dem sicheren Element generiert bzw. gespeichert ist) erfüllt.

Wie bereits oben ausgeführt wurde, kann das Authentisierungszertifikat $Cert_A$ zur Authentisierung des Benutzers des mobilen Endgeräts 106 gegenüber Dritten genutzt werden.

Hierzu kann das Authentisierungszertifikat $Cert_A$ einen öffentlichen Schlüssel $pk_{root}$ der physikalischen Identität 108 in verschlüsselter Form aufweisen, wobei der physikalischen Identität 108 der öffentliche Schlüssel $pk_{root}$ durch

den Identitäten-Verwalter 110 zugeordnet ist.

Dadurch, dass das Authentisierungszertifikat Cert$_A$ den öffentlichen Schlüssel pk$_{root}$ der physikalischen Identität 108 in verschlüsselter Form aufweist kann sichergestellt werden, dass die Hauptidentität nur durch den Identitäten-Verwalter 110 aufgedeckt bzw. anhand des öffentlichen Schlüssel pk$_{root}$, der der physikalischen Identität 108 durch den Identitäten-Verwalter 110 zugeordnet ist, ermittelt werden kann.

Ferner kann das Authentisierungszertifikat Cert$_A$ eine Pseudo-Identität des Benutzers aufweisen, die von dem öffentlichen Schlüssel pk$_{root}$ der physikalischen Identität 108 abgeleitet ist, wobei der Nutzer der Pseudo-Identität nur durch den Identitäten-Verwalter 110 ermittelbar ist.

Die Pseudo-Identität kann mittels einer Hashfunktion erzeugt werden, die auf den öffentlichen Schlüssel pk$_{root}$ der physikalischen Identität und einer zusätzlichen Sicherheitsinformation angewendet wird.

Die zusätzliche Sicherheitsinformation kann eine binäre Zufallszahl, z.B. mit 64, 128, 265 oder 512 Stellen, sein und zu einer zusätzlichen Verschleierung des öffentlichen Schlüssels pk$_{root}$ in dem Ergebnis der Hashfunktion (Pseudo-Identität) genutzt werden, um die Sicherheit gegen fremdes Auslesen zu erhöhen.

Die Ableitung der Identitäten ist kontextsensitiv als auch attributsbasiert und kann entsprechend an einen spezifischen Kontext angepasst werden. Kontextsensitiv bezieht sich dabei auf den Anwendungsfall, wie z.B. ein Finanzkontext oder ein Gebäudezugang. Attributsbasiert bedeutet hier insbesondere, dass lediglich einige Attribute der Identität preisgegeben werden, wie z.B. Alter, Geschlecht, oder pseudonymisiert. Die Ableitung kann auf Basis des öffentlichen Schlüssels pk$_{root}$ der Hauptidentität auf eine sichere Weise erfolgen, so dass die Hauptidentität nur mithilfe des vertrauenswürdigen Identitätsanbieters 110 aufgedeckt werden kann. Eine mögliche Ableitungsfunktion kann folgendermaßen definiert werden:

$$identity = H(pk_{Root}, secret, context) \tag{1}$$

Die Funktion H stellt dazu eine kryptographische Hashfunktion dar. Charakteristisches Merkmal ist insbesondere die Einwegeigenschaft, so dass unter Kenntnisname der Identität (identity in Formel 1) und des Kontexts (context in Formel 1) nicht auf das Geheimnis (secret in Formel 1) oder die Hauptidentität geschlossen werden kann. Die Identitätsinformationen können nebst den Attributen durch den vertrauenswürdigen Identitätsanbieter 110 signiert und in dem Zertifikat für eine spezifische Identität zur Verfügung gestellt werden (beispielsweise als Teil des certinfo-Felds). Die Speicherung und Verwendung des Geheimnisses (secret in Formel 1) stellt dazu sicher, dass Identitäten explizit an eine spezifische Hauptidentität gebunden sind.

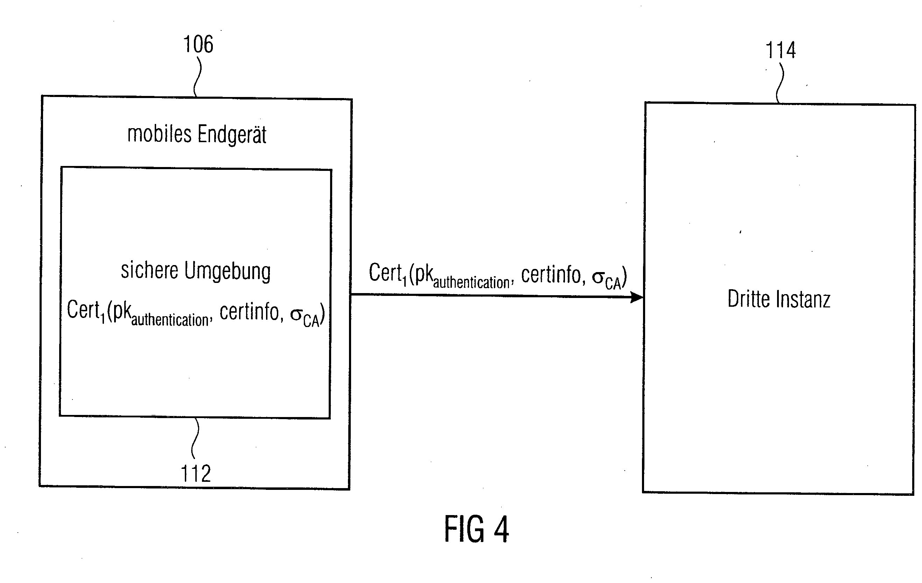

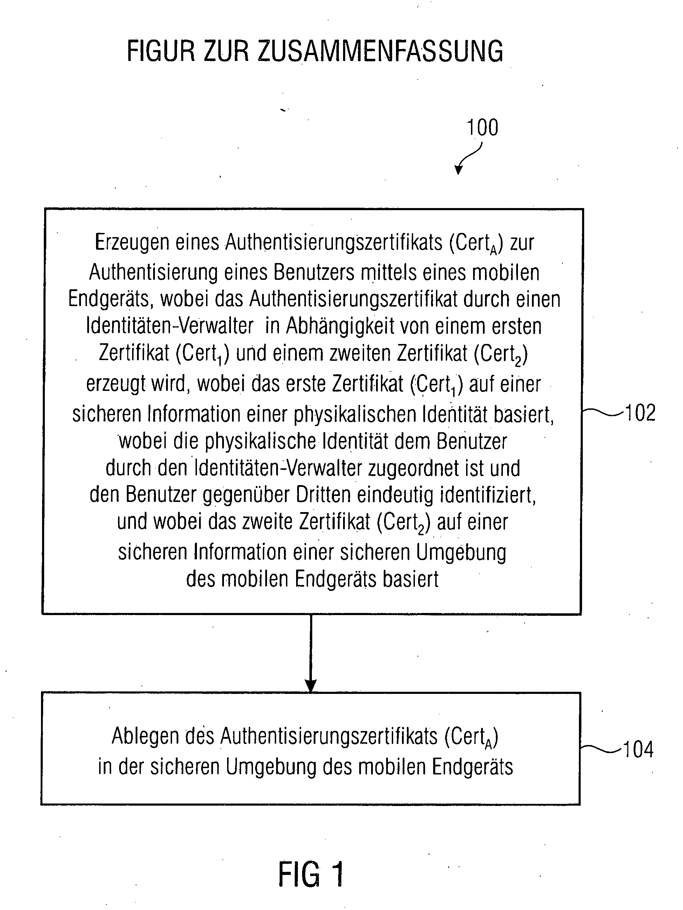

Fig. 4 zeigt Interaktionen zwischen dem mobilen Endgeräts 106 und einem Dritten 114 während des Betriebs.

Zur Authentisierung des Benutzers des mobilen Endgeräts 112 gegenüber dem Dritten 114, z.B. eine Dritte Instanz, kann das Authentisierungszertifikat Cert$_A$ an den Dritten 114 übermittelt werden. Dabei kann der Benutzer gegenüber dem Dritten 114 aüthentisiert werden, falls das Authentisierungszertifikat Cert$_A$ gültig ist.

Mit anderen Worten, zur Identifizierung kann das mobile Endgerät 106 nun das Zertifikat (Cert$_A$(pk$_{finance}$)Certinfo,$\sigma_{CA}$)) gegenüber anderen Entitäten 114 vorweisen. Die Authentizität des Zertifikats kann mittels eines Anforderungs-Antwort-Authentisierungsverfahren überprüft werden. Im sicheren Element 112 können eine Vielzahl von verschiedenen Identitäten abgelegt werden, was ebenfalls anonymisiert erfolgen kann. Der vertrauenswürdige Identitätsanbieter 110 kann die jeweilige Identität entsprechend aufdecken, so dass auch in pseudonymisierten Szenarien eine Rechtsverbindlichkeit erreicht werden kann. Bei einem pseudonymisierten Szenario wird das Authentisierungszertifikat Cert$_A$ nicht für die Hauptidentität selbst sondern für ein Attribut der Hauptidentität, wie z.B. Alter oder Geschlecht, oder ein Pseudonym der Hauptidentität erzeugt. Ferner kann durch die Koppelung bzw. Verknüpfung des Authentisierungszertifikats Cert$_A$ an eine starke Identität (Hauptidentität) ein Nachweis über die Vertrauenswürdigkeit einer Identität gegenüber einem Drittanbieter 114 erbracht werden.

Bei Verlust des mobilen Endgeräts 112 können entsprechende Identitäten (z.B. ein oder mehrere Authentisierungszertifikate, die in der sicheren Umgebung 112 des mobilen Endgeräts 106 abgespeichert sind) gesperrt werden indem über die Chipkarte 108 eine entsprechende Sperrung beim vertrauenswürdigen Identitätsanbieter 110 beauftragt wird, der schließlich das ausgegebene Zertifikat zurückzieht bzw. zurückruft. Hierzu können Zertifikatssperrlisten benutzt werden. Um die Länge nicht zu sehr anwachsen zu lassen oder sogar zur Minimierung der Länge der Revokationslisten sind relativ kurze Gültigkeiten von Zertifikaten zu empfehlen. Dies hängt aber sehr stark von der Implementierung und dem entsprechenden Anwendungsfall ab. Die Länge der Revokationslisten ist dabei von der Gültigkeitsdauer der Zertifikate abhängig, d.h. umso länger die Zertifikate gültig sind, desto mehr Zertifikate würden die Revokationslisten enthalten bzw. in den Revokationslisten gespeichert sein. Beispielsweise müssten die Revokationslisten deutlich mehr Zertifikate enthalten bzw. auflisten, falls die Gültigkeit der Zertifikate drei Jahre beträgt, als dies bei einer Gültigkeit der Zertifikate von nur einem Monat der Fall wäre.

Bei manchen Ausführungsbeispielen können Identitätsinformationen mit dem Attribut auf dem mobilen Endgerät gespeichert werden und können auch in ungesicherter Form erfolgen. Anhand der Identitätsinformationen kann unter Rückgriff des vertrauenswürdigen Identitätsanbieters eine Authentisierung vorgenommen werden. Dazu kann sich das Gerät des Dritten (z.B. Verifizierers) mit dem vertrauenswürdigen Identitätsanbieter verbinden und eine Authentisierung anhand der Identitätsinformationen erfragen. Der vertrauenswürdige Identitätsanbieter leitet anhand der Identitätsinformationen und des gespeicherten Schlüsselmaterials der Hauptidentität ein Authentisierungstoken für den spezifischen erfragten Kontext ab. Das Authentisierungstoken kann dazu eine Signatur des vertrauenswürdigen Identitätsanbieters besitzen, um Manipulationen auf dem Übertragungsweg zu verhindern.

Bei den manchen Ausführungsbeispielen kann eine mobile Plattform zum Einsatz kommen, die nicht notwendigerweise über ein sicheres Element verfügen muss. Identitätsinformationen können dazu auf einem mobilen Endgerät gespeichert werden. Zur Authentisierung erstellt der Verifizierer einen geschützten Kommunikationskanal zum vertrauenswürdigen Identitätsanbieter und validiert die Authentizität. Notwendig für diese Realisierung ist eine eindeutige Charakterisierung der mobilen Plattform durch den Verifizierer. Dies kann beispielsweise über eine starke physikalische unklonbare Funktion (engl. strong physical unclonable function) realisiert werden indem ein Verifizierer ausgehend von Anforderungs-Antwort-Paaren das Gerät triggert und mit den CRPs des vertrauenswürdigen Identitäten-Verwalters für dieses Gerät abgleicht. Eine weitere Möglichkeit ist eine Charakterisierung mittels optischer Verfahren. Hier wäre das Szenario eine visuelle Überprüfung der Identität (ähnlich bei einem Personalausweis) durch eine Autorität. Die Autorität überprüft die Identitätsinformationen unter Rückgriff auf den vertrauenswürdigen Identitätsanbieter. Eine Realisierungsmöglichkeit stellt beispielsweise die Darstellung eines zweidimensionalen Strichcodes durch die mobile Plattform dar. Der Strichcode verweist auf eine gesicherte Identitätssitzung beim vertrauenswürdigen Identitätsanbieter, der Identifizierungsinformationen übermittelt. Eine mit einem sicheren Gerät ausgestattete Autorität, kann dadurch den zweidimensionalen Strichcode scannen und die mit einer Signatur vom vertrauenswürdigen Identitätsanbieter übermittelten Informationen mit den Gesichtszügen der Person, die zu identifizieren ist, abgleichen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eine Hardware-Apparats), wie zum Beispiel einen Mikroprozessor, einen programmierbaren Computer oder eine elektronische Schaltung. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Aspekte gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Aspekte der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Aspekte umfassen das Computerprogramm zum Durchführen eines der hierin beschriebenen Verfahren, wobei das Computerprogramm auf einem maschinenlesbaren Träger gespeichert ist. Mit anderen Worten ist ein Aspekt des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiterer Aspekt des erfindungsgemäßen Verfahrens ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiterer Aspekt des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiterer Aspekt umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiterer Aspekt umfasst einen Computer, auf dem das Computerprogramm zum Durchführen eines der hierin beschriebenen Verfahren installiert ist.

Ein weiterer Aspekt gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung zu dem Empfänger kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Aspekten kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Aspekten kann ein feldprogrammierbares Gatterarray mit einem Mikroprozessor zusammenwirken, um eines der hierin beschriebenen Verfahren durchzuführen. Allgemein, werden die Verfahren bei einigen Aspekten seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

**Patentansprüche**

1. Verfahren (100) zum Versehen eines mobilen Endgeräts mit einem Authentisierungszertifikat, aufweisend:

   Erzeugen (102) des Authentisierungszertifikats, $Cert_A$, zur Authentisierung eines Benutzers mittels des mobilen Endgeräts (106), wobei das Authentisierungszertifikat, $Cert_A$, durch einen Identitäten-Verwalter (110) in Abhängigkeit von einem ersten Zertifikat, $Cert_1$, und einem zweiten Zertifikat, $Cert_2$, erzeugt wird, wobei das erste Zertifikat, $Cert$, auf einer sicheren Information einer physikalischen Identität (108) basiert, wobei die physikalische Identität (108) dem Benutzer durch den Identitäten-Verwalter (110) zugeordnet ist und den Benutzer gegenüber Dritten (114) eindeutig identifiziert, und wobei das zweite Zertifikat, $Cert_2$, auf einer sicheren Information einer sicheren Umgebung (112) des mobilen Endgeräts (106) basiert; und
   Speichern (104) des Authentisierungszertifikats, $Cert_A$, der sicheren Umgebung (112) des mobilen Endgeräts (106);
   wobei das zweite Zertifikat, $Cert_2$, in der sicheren Umgebung (112) des mobilen Endgeräts (106) erzeugt wird.

2. Verfahren (100) nach Anspruch 1, wobei das erste Zertifikat, $Cert_1$, in der physikalischen Identität (108) erzeugt wird oder durch den Identitäten-Verwalter (110) erzeugt und in der physikalischen Identität (108) gespeichert wird.

3. Verfahren (100) nach wenigstens einem der Ansprüche 1 bis 2, wobei das Authentisierungszertifikat, $Cert_A$, durch den Identitäten-Verwalter (110) erzeugt wird, falls das erste Zertifikat, $Cert_1$, und das zweite Zertifikat, $Cert_2$, gültig sind.

4. Verfahren (100) nach einem der Ansprüche 1 bis 3, ferner aufweisend:

   Generieren eines ersten asymmetrischen Schlüsselpaars mit einem ersten öffentlichen Schlüssel, $pk_{authentication}$, wobei das erste asymmetrische Schlüsselpaar in der sicheren Umgebung (112) des mobilen Endgeräts (106) generiert wird, und wobei zumindest eines aus der Gruppe von dem ersten Zertifikat, $Cert_1$, dem zweiten Zertifikat, $Cert_2$, und dem Authentisierungszertifikat $Cert_A$, von dem ersten öffentlichen Schlüssel, $pk_{authentication}$, abhängig ist.

5. Verfahren (100) nach Anspruch 4, wobei das erste Zertifikat durch Signieren des ersten öffentlichen Schlüssels, $pk_{authentication}$, unter Verwendung eines privaten Schlüssels, $sk_{root}$, der physikalischen Identität (108) erzeugt wird.

6. Verfahren (100) nach Anspruch 5, wobei die sichere Information der physikalischen Identität (108) der private Schlüssel, $sk_{root}$, der physikalischen Identität ist, wobei der physikalischen Identität (108) der private Schlüssel, $sk_{root}$, durch den Identitäten-Verwalter (110) eindeutig zugeordnet ist.

7. Verfahren (100) nach einem der Ansprüche 4 bis 6, wobei das zweite Zertifikat ($Cert_2$) durch Signieren des ersten öffentlichen Schlüssels, $pk_{authentication}$, unter Verwendung eines privaten Bestätigungsschlüssels, $sk_{EK}$, der sicheren Umgebung (112) des mobilen Endgeräts (106) erzeugt wird.

**8.** Verfahren (100) nach Anspruch 7, wobei die sichere Information der sicheren Umgebung (112) des mobilen Endgeräts der private Bestätigungsschlüssel, $sk_{EK}$, ist, wobei ein öffentlicher Bestätigungsschlüssel, $pk_{EK}$, zu dem privaten Bestätigungsschlüssel ($sk_{EK}$) durch einen Schlüssel-Verwalter signiert ist.

**9.** Verfahren (100) nach Anspruch 8, wobei der private Bestätigungsschlüssel, $sk_{EK}$, durch den Schlüssel-Verwalter mittels eines ersten Bestätigungszertifikats, $Cert_{EK}$, zertifiziert ist, wobei das erste Bestätigungszertifikat, $Cert_{EK}$, die sichere Umgebung (112) des mobilen Endgeräts (106) eindeutig identifiziert.

**10.** Verfahren (100) nach einem der Ansprüche 4 bis 9, ferner aufweisend:

Übermitteln des ersten Zertifikats, $Cert_1$, oder des zweiten Zertifikats, $Cert_2$, von dem mobilen Endgerät (106) an den Identitäten-Verwalter (110); und
Extrahieren des ersten öffentlichen Schlüssels, $pk_{authentication}$, aus dem ersten Zertifikat, $Cert_1$, oder dem zweiten Zertifikat, $Cert_2$;
wobei das Authentisierungszertifikat, $Cert_A$, durch den Identitäten-Verwalter (110) durch Signieren des ersten öffentlichen Schlüssels, $pk_{authenticatio}$, unter Verwendung des privaten Schlüssels, $sk_{CA}$, des Identitäten-Verwalter (110) erzeugt wird.

**11.** Verfahren (100) nach einem der Ansprüche 4 bis 10, ferner aufweisend:

Verschlüsseln des Authentisierungszertifikats, $Cert_A$, mit dem ersten öffentlichen Schlüssel, $pk_{authentication}$ des ersten asymmetrischen Schlüsselpaars durch den Identitäten-Verwalter (110), um ein verschlüsseltes Authentisierungszertifikat, $Cert_A{}^*$, zu erhalten;
Übermitteln des verschlüsselten Authentisierungszertifikats, $Cert_A{}^*$, an das mobile Endgerät (106); und
Entschlüsseln des verschlüsselten Authentisierungszertifikats, $Cert_A{}^*$, mit einem ersten privaten Schlüssel $sk_{authentication}$, des ersten asymmetrischen Schlüsselpaars in der sicheren Umgebung (112) des mobilen Endgeräts (106), um das Authentisierungszertifikat, $Cert_A$, zu erhalten.

**12.** Verfahren (100) nach einem der Ansprüche 9 bis 11, ferner aufweisend:

Übermitteln des ersten Bestätigungszertifikats, $Cert_{EK}$, an den Identitäten-Verwalter (110); und
Überprüfen der Gültigkeit des Bestätigungszertifikats, $Cert_{EK}$, durch den Identitäten-Verwalter (110);
wobei das Authentisierungszertifikat, $Cert_A$, durch den Identitäten-Verwalter (110) erzeugt wird, falls das Bestätigungszertifikat, $Cert_{EK}$, gültig ist.

**13.** Verfahren (100) nach einem der Ansprüche 9 bis 12, ferner aufweisend:

Generieren eines zweiten asymmetrischen Schlüsselpaars mit einem zweiten öffentlichen Schlüssel, $pk_{SE}$, wobei das zweite asymmetrische Schlüsselpaar in der sicheren Umgebung (112) des mobilen Endgeräts (106) generiert wird;
Erzeugen eines zweiten Bestätigungszertifikats, $Cert_{SE}$, durch Signieren des zweiten öffentlichen Schlüssels, $pk_{SE}$, unter Verwendung des privaten Bestätigungsschlüssel, $sk_{EK}$;
Übermitteln des zweites Bestätigungszertifikats, $Cert_{SE}$, an den Identitäten-Verwalter (110); und
Überprüfen der Gültigkeit des zweiten Bestätigungszertifikats, $Cert_{SE}$, durch den Identitäten-Verwalter (110);
wobei das Authentisierungszertifikat ($Cert_A$) durch den Identitäten-Verwalter (110) erzeugt wird, falls das zweite Bestätigungszertifikat, $Cert_{SE}$, gültig ist.

**14.** Verfahren (100) nach einem der Ansprüche 1 bis 13, ferner aufweisend:

Übermitteln des Authentisierungszertifikats, $Cert_A$, an einen Dritten (114);
Authentisieren des Benutzers gegenüber dem Dritten (114) falls das Authentisierungszertifikat, $Cert_A$, gültig ist.

**15.** Verfahren (100) nach Anspruch 14, wobei das Authentisierungszertifikat, $Cert_A$, nicht gültig ist, falls das Authentisierungszertifikat, $Cert_A$, durch den Identitäten-Verwalter (110) gesperrt ist.

**16.** Verfahren (100) nach einem der Ansprüche 1 bis 15, wobei das Authentisierungszertifikat, $Cert_A$, von einem öffentlichen Schlüssel, $pk_{root}$, der physikalischen Identität (108) abhängig ist.

**17.** Verfahren (100) nach Anspruch 16, wobei der physikalischen Identität (108) der öffentliche Schlüssel, $pk_{root}$, der physikalischen Identität (108) durch den Identitäten-Verwalter (110) zugeordnet ist.

**18.** Verfahren (100) nach einem der Ansprüche 16 oder 17, ferner aufweisend:

Entschlüsseln der verschlüsselten Form des öffentlichen Schlüssels, $pk_{root}$, durch den Identitäten-Verwalter (110), um den öffentlichen Schlüssel, $pk_{root}$, der physikalischen Identität zu erhalten; und
Ermitteln des Benutzers anhand des öffentlichen Schlüssels, $pk_{root}$, der physikalischen Identität (108).

**19.** Verfahren (100) nach einem der Ansprüche 16 bis 18, wobei das Authentisierungszertifikat, $Cert_A$, eine Pseudoidentität des Benutzers aufweist, die von dem öffentlichen Schlüssel, $pk_{root}$, der physikalischen Identität (108) abgeleitet ist, wobei eine Identität des Benutzers der Pseudoidentität nur durch den Identitäten-Verwalter (110) ermittelbar ist.

**20.** Verfahren (100) nach Anspruch 19, wobei die Pseudoidentität mittels einer Hashfunktion erzeugt wird, die auf den öffentlichen Schlüssel, $pk_{root}$, der physikalischen Identität (108) und einer zusätzlichen Sicherheitsinformation angewendet wird.

**21.** Verfahren (100) nach einem der Ansprüche 1 bis 20, wobei die physikalische Identität (108) ein Ausweisdokument ist, und wobei der Identitäten-Verwalter eine staatliche Einrichtung, eine staatlich überwachte Einrichtung oder eine vertrauenswürdige gewinnorientierte Einrichtung ist.

**22.** Computerprogrammprodukt mit von einem Computersystem ausführbaren Instruktionen zur Durchführung eines Verfahrens nach einem der Ansprüche 1 bis 19.

**23.** Computerprogramm zur Durchführung des Verfahrens nach einem der Ansprüche 1 bis 21, wenn das Computerprogramm auf einem Computer oder Mikroprozessor abläuft.

**24.** Mobiles Endgerät (106) mit einer sicheren Umgebung (112), in der ein Authentisierungszertifikat, $Cert_A$, zur Authentisierung eines Benutzers des mobilen Endgeräts (106) abgelegt ist, wobei das Authentisierungszertifikat, $Cert_A$, durch einen Identitäten-Verwalter (110) in Abhängigkeit von einem ersten Zertifikat, $Cert_1$, und einem zweiten Zertifikat, $Cert_2$, erzeugt ist, wobei das erste Zertifikat, $Cert_1$, auf einer sicheren Information einer physikalischen Identität (108) basiert, wobei die physikalische Identität (108) dem Benutzer durch den Identitäten-Verwalter (110) zugeordnet ist und den Benutzer gegenüber Dritten (114) eindeutig identifiziert, und wobei das zweite Zertifikat, $Cert_2$, auf einer sicheren Information des mobilen Endgeräts (106) basiert, wobei das zweite Zertifikat, $Cert_2$, in der sicheren Umgebung (112) des mobilen Endgeräts (106) erzeugt wird.

**Claims**

**1.** Method (100) for providing a mobile terminal device with an authentication certificate, comprising:

generating (102) the authentication certificate, $Cert_A$, for authentication of a user by means of the mobile terminal device (106), wherein the authentication certificate, $Cert_A$, is generated by an identity manager (110) in dependence on a first certificate, $Cert_1$, and a second certificate, $Cert_2$, wherein the first certificate, $Cert_1$, is based on secure information of a physical identity (108), wherein the physical identity (108) is allocated to the user by the identity manager (110) and uniquely identifies the user against third parties (114) and wherein the second certificate, $Cert_2$, is based on secure information of a secure environment (112) of the mobile terminal device (106); and
storing (104) the authentication certificate, $Cert_A$, in the secure environment (112) of the mobile terminal device (106);
wherein the second certificate, $Cert_2$, is generated in the secure environment (112) of the mobile terminal device (106).

**2.** Method (100) according to claim 1, wherein the first certificate, $Cert_1$, is generated in the physical identity (108) or is generated by the identity manager (110) and stored in the physical identity (108).

**3.** Method (100) according to at least one of claims 1 to 2, wherein the authentication certificate, $Cert_A$, is generated by the identity manager (110) if the first certificate, $Cert_1$, and the second certificate, $Cert_2$, are valid.

4. Method (100) according to one of claims 1 to 3, further comprising:

generating a first asymmetric key pair having a first public key, $pk_{authentication}$, wherein the first asymmetric key pair is generated in the secure environment (112) of the mobile terminal device (106) and wherein at least one of the group of the first certificate, $Cert_1$, the second certificate, $Cert_2$, and the authentication certificate, $Cert_A$, depends on the first public key, $pk_{authentication}$.

5. Method (100) according to claim 4, wherein the first certificate is generated by signing the first public key, $pk_{authentication}$, by using a private key, $sk_{root}$, of the physical identity (108).

6. Method (100) according to claim 5, wherein the secure information of the physical identity (108) is the private key, $sk_{root}$, of the physical identity, wherein the private key, $sk_{root}$, is uniquely allocated to the physical identity (108) by the identity manager (110).

7. Method (100) according to one of claims 4 to 6, wherein the second certificate, $Cert_2$, is generated by signing the first public key, $pk_{authentication}$, by using a private acknowledgement key, $sk_{EK}$, of the secure environment (112) of the mobile terminal device (106).

8. Method (100) according to claim 7, wherein the secure information of the secure environment (112) of the mobile terminal device is the private acknowledgement key, $sk_{EK}$, wherein a public acknowledgement key, $pk_{EK}$, for the private acknowledgement key, $sk_{EK}$, is signed by a key manager.

9. Method (100) according to claim 8, wherein the private acknowledgement key, $sk_{EK}$, is certified by the key manager by means of a first acknowledgement certificate, $Cert_{EK}$, wherein the first acknowledgement certificate, $Cert_{EK}$, uniquely identifies the secure environment (112) of the mobile terminal device (106).

10. Method (100) according to one of claims 4 to 9, further comprising:

transmitting the first certificate, $Cert_1$, or the second certificate, $Cert_2$, from the mobile terminal device (106) to the identity manager (110); and
extracting the first public key, $pk_{authentication}$, from the first certificate, $Cert_1$, or the second certificate, $Cert_2$;
wherein the authentication certificate, $Cert_A$, is generated by the identity manager (110) by signing the first public key, $pk_{authentication}$, by using the private key, $sk_{CA}$, of the identity manager (110).

11. Method (100) according to one of claims 4 to 10, further comprising:

encrypting the authentication certificate, $Cert_A$, with the first public key, $pk_{authentication}$, of the first asymmetric key pair by the identity manager (110) to obtain an encrypted authentication certificate, $Cert_A^*$;
transmitting the encrypted authentication certificate, $Cert_A^*$, to the mobile terminal device (106); and
decrypting the encrypted authentication certificate, $Cert_A^*$, with a first private key, $sk_{authentication}$, of the first asymmetric key pair in the secure environment (112) of the mobile terminal device (106) to obtain the authentication certificate, $Cert_A$.

12. Method (100) according to one of claims 9 to 11, further comprising:

transmitting the first acknowledgement certificate, $Cert_{EK}$, to the identity manager (110); and
checking the validity of the acknowledgement certificate, $Cert_{EK}$, by the identity manager (110);
wherein the authentication certificate, $Cert_A$, is generated by the identity manager (110) if the acknowledgement certificate, $Cert_{EK}$, is valid.

13. Method (100) according to one of claims 9 to 12, further comprising:

generating a second asymmetric key pair having a second public key, $pk_{SE}$, wherein the second asymmetric key pair is generated in the secure environment (112) of the mobile terminal device (106);
generating a second acknowledgement certificate, $Cert_{SE}$, by signing the second public key, $pk_{SE}$, by using the private acknowledgement key, $sk_{EK}$;

transmitting the second acknowledgement certificate, $Cert_{SE}$, to the identity manager (110); and
checking the validity of the second acknowledgement certificate, $Cert_{SE}$, by the identity manager (110);
wherein the authentication certificate, $Cert_A$, is generated by the identity manager (110) if the second acknowledgement certificate, $Cert_{SE}$, is valid.

14. Method (100) according to one of claims 1 to 13, further comprising:

transmitting the authentication certificate, $Cert_A$, to a third party (114);
authenticating the user with respect to the third party (114) if the authentication certificate, $Cert_A$, is valid.

15. Method (100) according to claim 14, wherein the authentication certificate $Cert_A$ is not valid if the authentication certificate, $Cert_A$, is locked by the identity manager (110).

16. Method (100) according to one of claims 1 to 15, wherein the authentication certificate, $Cert_A$, depends on a public key, $pk_{root}$, of the physical identity (108).

17. Method (100) according to claim 16, wherein the public key, $pk_{root}$, of the physical identity (108) is allocated to the physical identity (108) by the identity manager (110).

18. Method (100) according to one of claims 16 or 17, further comprising:

decrypting the encrypted form of the public key, $pk_{root}$, by the identity manager (110) to obtain the public key, $pk_{root}$, of the physical identity; and
determining the user based on the public key, $pk_{root}$, of the physical identity (108).

19. Method (100) according to one of claims 16 to 18, wherein the authentication certificate, $Cert_A$, comprises a pseudo-identity of the user that is derived from the public key, $pk_{root}$, of the physical identity (108), wherein an identity of the user of the pseudo-identity can only be determined by the identity manager (110).

20. Method (100) according to claim 19, wherein the pseudo-identity is generated by means of a hash function that is applied to the public key, $pk_{root}$, of the physical identity (108) and additional security information.

21. Method (100) according to one of claims 1 to 20, wherein the physical identity (108) is an identification document and wherein the identity manager is a state institution, an institution monitored by the state or a trustworthy profit-oriented institution.

22. Computer program comprising instructions executable by a computer system for performing a method according to one of claims 1 to 19.

23. Computer program for performing the method according to one of claims 1 to 21, when the computer program runs on a computer or microprocessor.

24. Mobile terminal device (106) with a secure environment (112) where an authentication certificate, $Cert_A$, is stored for authentication of a user of the mobile terminal device (106), wherein the authentication certificate, $Cert_A$, is generated by an identity manager (110) in dependence on a first certificate $Cert_1$ and a second certificate, $Cert_2$, wherein the first certificate, $Cert_1$, is based on secure information of a physical identity (108), wherein the physical identity (108) is allocated to the user by the identity manager (110) and uniquely identifies the user against third parties (114) and wherein the second certificate, $Cert_2$, is based on secure information of the mobile terminal device (106), wherein the second certificate, $Cert_2$, is generated in the secure environment (112) of the mobile terminal device (106).

**Revendications**

1. Procédé (100) destiné à pourvoir un terminal mobile d'un certificat d'authentification, présentant le fait de:

générer (102) le certificat d'authentification, $Cert_A$, pour authentifier un utilisateur au moyen du terminal mobile (106), le certificat d'authentification, $Cert_A$, étant généré par un gestionnaire d'identités (110) en fonction d'un

premier certificat, $Cert_1$, et d'un deuxième certificat, $Cert_2$, où le premier certificat, $Cert_1$, est basé sur une information sécurisée d'une identité physique (108), l'identité physique étant associée à l'utilisateur par le gestionnaire d'identités (110) et identifiant l'utilisateur de manière univoque par rapport à des tiers (114), et où le deuxième certificat, $Cert_2$, est basé sur une information sécurisée d'un environnement sécurisé (112) du terminal mobile (106); et

mémoriser (104) le certificat d'authentification, $Cert_A$, dans l'environnement sécurisé (112) du terminal mobile (106);

dans lequel le deuxième certificat, $Cert_2$, est généré dans l'environnement sécurisé (112) du terminal mobile (106).

2. Procédé (100) selon la revendication 1, dans lequel le premier certificat, $Cert_1$, est généré dans l'identité physique (108) ou est généré par le gestionnaire d'identités (110) et mémorisé dans l'identité physique (108).

3. Procédé (100) selon au moins l'une des revendications 1 à 2, dans lequel le certificat d'authentification, $Cert_A$, est généré par le gestionnaire d'identités (110) si le premier certificat, $Cert_1$, et le deuxième certificat, $Cert_2$, sont valides.

4. Procédé (100) selon l'une des revendications 1 à 3, présentant par ailleurs le fait de:

générer une première paire de clés asymétriques ayant une première clé publique, $pk_{authentication}$, la première paire de clés asymétriques étant générée dans l'environnement sécurisé (112) du terminal mobile (106), et au moins l'un parmi le groupe composé du premier certificat, $Cert_1$, du deuxième certificat, $Cert_2$, et du certificat d'authentification, $Cert_A$, dépendant de la première clé publique, $pk_{authentication}$.

5. Procédé (100) selon la revendication 4, dans lequel le premier certificat est généré par signature de la première clé publique, $pk_{authentication}$, à l'aide d'une clé privée, $sk_{root}$, de l'identité physique (108).

6. Procédé (100) selon la revendication 5, dans lequel l'information sécurisée de l'identité physique (108) est la clé privée, skroot, de l'identité physique, dans lequel la clé privée, $sk_{root}$, est associée de manière univoque à l'identité physique (108) par le gestionnaire d'identités (110).

7. Procédé (100) selon l'une des revendications 4 à 6, dans lequel le deuxième certificat, $Cert_2$, est généré par signature de la première clé publique, $pk_{authentication}$, à l'aide d'une clé de confirmation privée, $sk_{EK}$, de l'environnement sécurisé (112) du terminal mobile (106).

8. Procédé (100) selon la revendication 7, dans lequel l'information sécurisée de l'environnement sécurisé (112) du terminal mobile est la clé de confirmation privée, $sk_{EK}$, dans lequel une clé de confirmation publique, $pk_{EK}$, pour la clé de confirmation privée, $sk_{EK}$, est signée par un gestionnaire de clés.

9. Procédé (100) selon la revendication 8, dans lequel la clé de confirmation privée, $sk_{EK}$, est certifiée par le gestionnaire de clés au moyen d'un premier certificat de confirmation, $Cert_{EK}$, dans lequel le premier certificat de confirmation, $Cert_{EK}$, identifie de manière univoque l'environnement sécurisé (112) du terminal mobile (106).

10. Procédé (100) selon l'une des revendications 4 à 9, présentant par ailleurs le fait de:

transmettre le premier certificat, $Cert_1$, ou le deuxième certificat, $Cert_2$, du terminal mobile (106) au gestionnaire d'identités (110); et
extraire la première clé publique, $pk_{authentication}$, du premier certificat, $Cert_1$, ou du deuxième certificat, $Cert_2$;
dans lequel le certificat d'authentification, $Cert_A$, est généré par le gestionnaire d'identités (110) par signature de la première clé publique, $pk_{authentication}$, à l'aide de la clé privée, $sk_{CA}$, du gestionnaire d'identités (110).

11. Procédé (100) selon l'une des revendications 4 à 10, présentant par ailleurs le fait de:

crypter le certificat d'authentification, $Cert_A$, avec la première clé publique, $pk_{authentication}$, de la première paire de clés asymétriques par le gestionnaire d'identités (110), pour obtenir un certificat d'authentification crypté, $Cert_A{}^*$;
transmettre le certificat d'authentification crypté, $Cert_A{}^*$, au terminal mobile (106); et
décrypter le certificat d'authentification crypté, $Cert_A{}^*$, par une première clé privée, $sk_{authentication}$, de la première paire de clés asymétriques dans l'environnement sécurisé (112) du terminal mobile (106), pour obtenir le certificat d'authentification, Cert$_A$.

**12.** Procédé (100) selon l'une des revendications 9 à 11, présentant par ailleurs le fait de:

transmettre le premier certificat de confirmation, Cert$_{EK}$, au gestionnaire d'identités (110); et
vérifier la validité du certificat de confirmation, Cert$_{EK}$, par le gestionnaire d'identités (110);
dans lequel le certificat d'authentification, Cert$_A$, est généré par le gestionnaire d'identités (110) si le certificat de confirmation, Cert$_{EK}$, est valide.

**13.** Procédé (100) selon l'une des revendications 9 à 12, présentant par ailleurs le fait de:

générer une deuxième paire de clés asymétriques avec une deuxième clé publique, pk$_{SE}$, la deuxième paire de clés asymétriques étant générée dans l'environnement sécurisé (112) du terminal mobile (106);
générer un deuxième certificat de confirmation, Cert$_{SE}$, par signature de la deuxième clé publique, pk$_{SE}$, à l'aide de la clé de confirmation privée, sk$_{EK}$;
transmettre le deuxième certificat de confirmation, Cert$_{SE}$, au gestionnaire d'identités (110); et
vérifier la validité du deuxième certificat de confirmation, Cert$_{SE}$, par le gestionnaire d'identités (110);
dans lequel le certificat d'authentification, Cert$_A$, est généré par le gestionnaire d'identités (110) si le deuxième certificat de confirmation, Cert$_{SE}$, est valide.

**14.** Procédé (100) selon l'une des revendications 1 à 13, présentant par ailleurs le fait de:

transmettre le certificat d'authentification, Cert$_A$, à un tiers (114);
authentifier l'utilisateur par rapport au tiers (114) si le certificat d'authentification, Cert$_A$, est valide.

**15.** Procédé (100) selon la revendication 14, dans lequel le certificat d'authentification, Cert$_A$, n'est pas valide si le certificat d'authentification, Cert$_A$, est bloqué par le gestionnaire d'identités (110).

**16.** Procédé (100) selon l'une des revendications 1 à 15, dans lequel le certificat d'authentification, Cert$_A$, dépend d'une clé publique, pk$_{root}$, de l'identité physique (108).

**17.** Procédé (100) selon la revendication 16, dans lequel la clé publique, pk$_{root}$, de l'identité physique (108) est associée à l'identité physique (108) par le gestionnaire d'identités (110).

**18.** Procédé (100) selon l'une des revendications 16 ou 17, présentant par ailleurs le fait de:

décrypter la forme cryptée de la clé publique, pk$_{root}$, par le gestionnaire d'identités (110), pour obtenir la clé publique, pk$_{root}$, de l'identité physique; et
déterminer l'utilisateur à l'aide de la clé publique, pk$_{root}$, de l'identité physique (108).

**19.** Procédé (100) selon l'une des revendications 16 à 18, dans lequel le certificat d'authentification, Cert$_A$, présente une pseudo-identité de l'utilisateur qui est dérivée de la clé publique, pk$_{root}$, de l'identité physique (108), une identité de l'utilisateur de la pseudo-identité ne pouvant être déterminée que par le gestionnaire d'identités (110).

**20.** Procédé (100) selon la revendication 19, dans lequel la pseudo-identité est générée par une fonction de hachage qui est appliquée à la clé publique, pk$_{root}$, de l'identité physique (108) et à une information de sécurité additionnelle.

**21.** Procédé (100) selon l'une des revendications 1 à 20, dans lequel l'identité physique (108) est un document d'identité, et dans lequel le gestionnaire d'identités est un organisme gouvernemental, un organisme contrôlé par l'état ou un organisme à but lucratif de confiance.

**22.** Produit de programme d'ordinateur avec des instructions exécutables par un système d'ordinateur pour la mise en oeuvre d'un procédé selon l'une des revendications 1 à 19.

**23.** Programme d'ordinateur pour réaliser le procédé selon l'une des revendications 1 à 21 lorsque le programme d'ordinateur est exécuté sur un ordinateur ou un microprocesseur.

**24.** Terminal mobile (106) avec un environnement sécurisé (112), dans lequel est enregistré un certificat d'authentification, Cert$_A$, pour l'authentification d'un utilisateur du terminal mobile (106), le certificat d'authentification, Cert$_A$, étant généré par un gestionnaire d'identités (110) en fonction d'un premier certificat, Cert$_1$, et d'un deuxième certificat, Cert$_2$, dans lequel le premier certificat, Cert$_1$, est basé sur une information sécurisée d'une identité physique (108), l'identité physique (108) étant associée à l'utilisateur par le gestionnaire d'identités (110) et identifiant l'utilisateur de manière univoque par rapport à des tiers (114), et dans lequel le deuxième certificat, Cert$_2$, est basé sur une information sécurisée du terminal mobile (106), le deuxième certificat, Cert$_2$, étant généré dans l'environnement sécurisé (112) du terminal mobile (106).

100

Erzeugen eines Authentisierungszertifikats (Cert$_A$) zur Authentisierung eines Benutzers mittels eines mobilen Endgeräts, wobei das Authentisierungszertifikat durch einen Identitäten-Verwalter in Abhängigkeit von einem ersten Zertifikat (Cert$_1$) und einem zweiten Zertifikat (Cert$_2$) erzeugt wird, wobei das erste Zertifikat (Cert$_1$) auf einer sicheren Information einer physikalischen Identität basiert, wobei die physikalische Identität dem Benutzer durch den Identitäten-Verwalter zugeordnet ist und den Benutzer gegenüber Dritten eindeutig identifiziert, und wobei das zweite Zertifikat (Cert$_2$) auf einer sicheren Information einer sicheren Umgebung des mobilen Endgeräts basiert

102

Ablegen des Authentisierungszertifikats (Cert$_A$) in der sicheren Umgebung des mobilen Endgeräts

104

FIG 1

EP 2 765 752 B1

```
                                    103

┌─────────────────────────┐                                    ┌──────────────────┐
│     mobiles Endgerät     │  Cert₁(pk_authentication, certinfo, σ_root)    │                  │
│  ┌───────────────────┐   │  ──────────────────────────────────▶          │                  │
│  │ sichere Umgebung  │   │                                               │                  │
│  │   (sk_EK, pk_EK)   │   │  Cert₂(pk_authentication, certinfo, σ_EK)      │                  │
│  │                   │   │  ──────────────────────────────────▶          │                  │
│  │ ─ ─ ─ ─ ─ ─ ─ ─ ─ │   │                                               │             ~110 │
│  │                   │   │  Cert_EK(pk_EK, certinfo, σ_EK)                │                  │
│  │                   │   │  ─ ─ ─ ─ ─ ─ ─ ─ ─ ─ ─ ─ ─ ─ ─ ─ ─▶          │                  │
│  │(sk_authentication,│   │                                               │                  │
│  │ pk_authentication)│   │  Cert_SE(pk_SE, certinfo, σ_EK)                │ Identitäten-     │
│  │  (sk_SE, pk_SE)   │   │  ─ ─ ─ ─ ─ ─ ─ ─ ─ ─ ─ ─ ─ ─ ─ ─ ─▶          │  Verwalter       │
│  └───────────────────┘   │                                               │ (sk_CA, pk_CA)   │
│                          │  Cert_A(pk_authentication, certinfo, σ_EK)     │                  │
│                          │  ◀──────────────────────────────────          │                  │
└──────────────────────────┘                                              │                  │
        │          ▲                                                      │                  │
        │          │                                                      │                  │
pk_authentication   Cert₁(pk_authentication, certinfo, σ_root)             │                  │
        │          │                                                      │                  │
        ▼          │                                                      │                  │
┌─────────────────────────┐                                              └──────────────────┘
│ physikalische Identität │
│                         │
│    (sk_root, pk_root)    │
│                         │
│ Cert(pk_root, certinfo, │
│        σ_CA)            │
└─────────────────────────┘
```

FIG 2

FIG 3

vertrauenswürdiger Identitätsanbieter

- Identitäten
- Zertifikate
- Identitätsspeicher
- Schlüssel

106

1.) Aufbauen eines sicheren Kanals
2.) Nachweisen des Besitzes der Chipkarte
3.) Nachweisen der Authentizität des sicheren Elements
4.) Nachweisen der Authentizität des im sicheren Elements erzeugten Schlüssels
5.) Bilden der generierten Identität an das sichere Element

NFC fähige mobile Plattform

120 — Netzwerkschnittstelle

Prozessor

sicheres Element — Schlüsselspeicher

Bestätigungsschlüssel

NFC-Steuereinheit

Nahfeld

ISO/IEC 14443 A/B

122
112
124
126

108

berührungslose Schnittstelle

nPA

Schlüsselspeicher

Hauptidentität

130

FIG 4

# FIGUR ZUR ZUSAMMENFASSUNG

100

Erzeugen eines Authentisierungszertifikats ($Cert_A$) zur Authentisierung eines Benutzers mittels eines mobilen Endgeräts, wobei das Authentisierungszertifikat durch einen Identitäten-Verwalter in Abhängigkeit von einem ersten Zertifikat ($Cert_1$) und einem zweiten Zertifikat ($Cert_2$) erzeugt wird, wobei das erste Zertifikat ($Cert_1$) auf einer sicheren Information einer physikalischen Identität basiert, wobei die physikalische Identität dem Benutzer durch den Identitäten-Verwalter zugeordnet ist und den Benutzer gegenüber Dritten eindeutig identifiziert, und wobei das zweite Zertifikat ($Cert_2$) auf einer sicheren Information einer sicheren Umgebung des mobilen Endgeräts basiert

102

Ablegen des Authentisierungszertifikats ($Cert_A$) in der sicheren Umgebung des mobilen Endgeräts

104

# FIG 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007016170 A1
- EP 1873668 A1
- US 2008022103 A1